(19) Europäisches Patentamt
European Patent Office
Office européen des brevets

(11) **EP 1 209 547 A2**

(12) **EUROPÄISCHE PATENTANMELDUNG**

(43) Veröffentlichungstag:
**29.05.2002 Patentblatt 2002/22**

(51) Int Cl.⁷: **G05D 23/19**, G05B 13/02

(21) Anmeldenummer: **01127375.2**

(22) Anmeldetag: **22.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **24.11.2000 DE 10058429**

(71) Anmelder: **Moeller GmbH**
**53115 Bonn (DE)**

(72) Erfinder: **Sokollik, Frank**
**98704 Oehrenstock / Ilmenau (DE)**

(54) **Verfahren und Vorrichtung zur Steuerung der Luftparameter in Räumen mittels Klimaanlage**

(57) Die Erfindung betrifft eine Steuerung von Luftparametern in Räumen mittels einer Klimaanlage mit Energierückgewinnung, unter Berücksichtigung eines in einem h-x-, bzw. t-x-Diagramm definierten Behaglichkeitsgebietes (BG). Es wird ein optimiertes Regelverfahren zur Verfügung gestellt, welches auf einer herkömmlichen speicherprogrammierbaren Steuerung ausführbar ist. Dazu wird der Regelvorgang in zwei Teilschritte aufgeteilt, wobei in dem ersten Teilschritt die Ermittlung eines optimalen Raumluftsollwertes und im zweiten Teilschritt die optimale Ermittlung der Steuersignale der Luftbehandlungsaggregate erfolgt.

*Fig. 5*

**Beschreibung**

Die Erfindung betrifft ein Verfahren und eine Vorrichtung zur Steuerung der Lufttemperatur und der Luftfeuchte in Räumen mittels einer Klimaanlage mit Energierückgewinnung, insbesondere in einer Vollklimaanlage.

Ziel einer Klimaanlage ist die Einhaltung von vorgegebenen Luftzuständen bezüglich Temperatur und Feuchte der Raumluft in den zu klimatisierenden Räumen. Diese Vorgaben sind in einem Toleranzfeld nach DIN 1946 vorgegeben und entsprechen der thermischen Behaglichkeit der in diesen Räumen befindlichen Personen. Aufgabe der Steuerung und Regelung einer Klimaanlage ist es, den Raumluftzustand in diesem Behaglichkeitsgebiet zu stabilisieren, obwohl wechselnde innere und äußere Wärme- und/oder Feuchtelasten auf den Raum wirken. Innere Wärmelasten sind Abwärme von Menschen, Maschinen und Anlagen bzw. Wärmeverluste. Innere Feuchtelasten ergeben sich durch Feuchtigkeitsabgabe von Personen, Pflanzen und Anlagen bzw. bei Feuchteverlust durch hygroskopische Materialien im Raum. Die äußeren Lasten sind durch das sich wechselnde Umgebungsklima, vor allem durch Außenlufttemperatur und Außenluftfeuchte gekennzeichnet, gegeben. Eine Automatisierungsanlage erfüllt diese Aufgabe dadurch, dass die Leistung der einzelnen Luftbehandlungsaggregate selbsttätig an die sich ändernden inneren und äußeren Lasten, die sogenannten Störgrößen, angepasst werden. Da es hierzu vielfältige Möglichkeiten gibt, sind Verfahren zu entwickeln, die diese Steuerungsaufgabe mit minimalem Aufwand realisieren. Dieser Aufwand wird dann durch eine Zielfunktion bewertet, deren wesentliche Parameter ökonomische und/oder ökologische Parameter (Energieverbrauch, Energiekosten, Betriebskosten, $CO_2$-Ausstoß und andere) sind.

In der EP 0 786 712 A2 werden zwei getrennte Verfahren beschrieben, die zum einem die Raumluftsollwerte ermitteln, und zum anderen praktikable Regelungsverfahren für die Leistungsanpassung der Luftbehandlungsaggregate vorschlagen.

Das dort beschriebene Verfahren zur Ermittlung der Raumluftsollwerte beruht grundsätzlich auf der Ansteuerung der Grenzen des Toleranzfeldes. Das Verfahren wurde nur heuristisch gewonnen, nicht als Ergebnis der Optimierung einer veränderbaren Zielfunktion. Somit können auch veränderliche Bewertungen, wie spezifische Betriebskosten der einzelnen Luftbehandlungsaggregate, nicht berücksichtigt werden.

Ausgangsinformationen für das Verfahren sind die Istwerte der Raumluftzustände $t_R$ und $x_R$ sowie der Außenluftzustände AU ($t_{AU}$, $x_{AU}$). Diese Messungen bilden zwei Punkte in einem t-x-Diagramm, deren Verbindung durch einen Geradenabschnitt die möglichen Zustandsänderungen für die Mischkammer bzw. den Energierückgewinner kennzeichnet. Die Ausgänge von konventionellen Reglern für die Zulufttemperatur und Zuluftfeuchte werden benutzt, um den Temperatur- und Feuchtebedarf abzuleiten. Aus diesen Informationen und der Anlagenkonfiguration werden zwei Richtungsvektoren ermittelt, die nach einer Multiplikation mit Bewertungsfaktoren im t-x-Diagramm mit dem Zuluftsollwert als Koordinatenursprung eingetragen werden. Diese Bewertungsfaktoren können die spezifischen Kosten der einzelnen Luftbehandlungsaggregate berücksichtigen. Das Verfahren beruht nun im wesentlichen darauf, dass der Zuluftsollwert und die bewerteten Bedarfsvektoren auf die Gerade der Energierückgewinnung projiziert und dort vektoriell addiert werden. Ergebnis ist ein Punkt auf der Geraden der Energierückgewinnung, dessen Normierung auf die Länge des Geradenabschnittes zu einem Steuersignal für die Energierückgewinnung führt. Dieses Signal wird zur direkten Ansteuerung des Energierückgewinners genutzt. Jeweils eine Kaskadenregelung für das Raumlufttemperatur- und -feuchteaggregat steuert die übrigen Aggregate an, wobei die vorgegebenen Raumluftsollwerte eingehalten werden. Dem Verfahren liegt die Annahme zugrunde, dass die Ausgangssignale der Regler für Zulufttemperatur und -feuchte, die den Temperatur- und Feuchtebedarf repräsentieren, gewichtet mit den spezifischen Kosten, ein Maß für die Kostenströme der einzelnen Aggregate sind. Um dem annähernd zu entsprechen, ist es zwingend notwendig, dass die Folgeregler in den beiden Kaskadenregelungen einen integralen Anteil haben. Wenn auch der Führungsregler zur Vermeidung bleibender Regelabweichungen einen I-Anteil erhält, wird die Stabilitätsreserve der Kaskade eingeschränkt. Somit muss der Folgeregler noch einen D-Anteil bekommen. Dies führt jedoch zu unerwünschten Verstärkungen hochfrequenter Störsignale. Außerdem sind die Reglerausgänge von den Reglerparametern und den Stellbereichen der Aggregate abhängig. Insbesondere die unterschiedlichen Stellbereiche der Aggregate zwingen zu einer Normierung der Regelvektoren, die im einzelnen problematisch sein kann. Es lässt sich kein exakter Bezug zu den wirklichen Betriebskosten herleiten, und es gelingt auch keine Fehlerabschätzung dieser Näherung.

Der Erfindung liegt daher die Aufgabe zugrunde, die vorstehend genannten Nachteile zu beseitigen und ein Verfahren zu schaffen, welches eine Optimierung der Steuerung und Regelung von Lufttemperatur und Luftfeuchte in einer Klimaanlage - insbesondere Vollklimaanlage - gewährleistet, und welches weiterhin auch auf einer herkömmlichen speicherprogrammierbaren Steuerung, insbesondere einer Kompakt-SPS, ausführbar ist.

Ausgehend von einem Verfahren der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Es wird eine Zielfunktion (*G*) zugrunde gelegt wird, deren Parameter durch technisch-physikalische Faktoren, wie Auslegungsgrößen der Luftbehandlungsaggregate (z.B. Mischkammer, Energierückgewinner), Außenluftzustand, Steuersignale (z.B. Begrenzung von Ventilöffnungen), Sollwerte der Raumlast und durch spezifische Bewertungsfaktoren, wie wirtschaftliche (z.B. Investition, Abschreibung), finanzielle (z.B. Energiekosten) und/oder ökologische (z.B. $CO_2$-Ausstoß) Betriebsgrößen der Klimaanlage bestimmt sind. Für die Zielfunktion wird eine Optimierung vorgenommen, wobei zur Optimierung zwei Teilschritte abgearbeitet werden:

- ein erster Teilschritt, in dem mit dem Behaglichkeitsgebiet im wesentlichen zusammenfallende optimale Raumluftsollwerte ausgehend von einem tabellarisch (Tab. 1) bestimmten, vom Außenluftzustand abhängiges Steuer-Startsignal für die Luftbehandlungsaggregate (z.B. Mischkammer, Energierückgewinner) ermittelt werden und
- ein zweiter Teilschritt, in dem optimale Steuersignale für die Luftbehandlungsaggregate (z.B. Mischkammer, Energierückgewinner) ermittelt und ausgegeben werden.

Die in den Teilschritten vorgenommene Ermittlung der optimalen Raumluftsollwerte, bzw. der optimalen Steuersignale wird jeweils mittels sequentiellem eindimensionalen Optimierungsverfahren durchgeführt.

Die Ermittlung der optimalen Raumluftsollwerte wird auf zumindest einer der, vorzugsweise auf allen Grenzlinien des Behaglichkeitsgebietes vorgenommen; vorzugsweise werden die Eckpunkte der Grenzlinien mit einbezogen.

Die Ermittlung der optimalen Steuersignale erfolgt auf der Strecke der Zustände der Luftbehandlungsaggregate zwischen dem Außenluftzustand und dem optimalen Abluftzustand innerhalb des t-x-Diagramms.

Weitere Ausführungsformen sind in den eingereichten Patentansprüchen formuliert.

Wie schon kurz dargestellt, wird das Gesamtsteuerungsverfahren ohne Verlust an Optimalität in zwei Teilschritte zerlegt: Die Bestimmung der optimalen Raumluftsollwerte und die Ermittlung optimaler Steuersignale für die Luftbehandlungsaggregate. Diese Trennung gelingt dadurch, dass für den ersten Teilschritt geeignete Werte der Startsignale für die Steuerung der Luftbehandlungsaggregate (einschließlich Energierückgewinner) in Abhängigkeit von den Startbedingungen (Raumlast, Außenluftzustand) vorgegeben werden. Über beide Teilschritte werden die optimierten Zielfunktionswerte in einem t-x-Diagramm exakt berechnet.

Eine erste bevorzugte Ausführungsform des erfindungsgemäßen Verfahrens wird realisiert, indem die Bestimmung der Zielfunktionswerte für beide Teilschritte dadurch erfolgt, dass ausgehend vom Luftzustand nach Mischkammer bzw. Energierückgewinner die Temperatur- bzw. die Feuchtedifferenz zwischen diesem Zustand und dem Zuluftsollwert gebildet wird. Der Zuluftsollwert ergibt sich aus dem Abluftzustand und der bekannten Raumlast. Ausgehend von den beiden Differenzen werden im Fall der Befeuchtung die Bedarfsvektoren für die Temperaturbehandlung und die Feuchtebehandlung durch Multiplikation mit den Richtungsvektoren für die Luftbehandlungsoperationen erhalten. Der Temperaturanteil des Feuchtebedarfsvektors wird zum Temperaturbedarfsvektor addiert. In einem t-x-Diagramm werden diese Bedarfsvektoren an den Zustandspunkt der Energierückgewinnung angelegt. Jetzt werden die spezifischen Enthalpien für den Zustand nach der Energierückgewinnung und für die Endpunkte des Temperaturbedarfsvektors sowie für den Zuluftsollwert gebildet. Eine bestimmte Enthalpie (Wärmeenergie) beinhaltet Temperatur- und Feuchteanteil an einem bestimmten Punkt bzw. Ort.

Die Differenz zwischen der spezifischen Enthalpie nach der Energierückgewinnung und der am Endpunkt des Temperaturbedarfsvektors ist die spezifische Enthalpie für die Wärmebehandlung. Analog ist die Differenz zwischen spezifischer Temperatur am Endpunkt des Temperaturbedarfsvektors und der spezifischen Enthalpie des Zuluftsollwertes gleich der spezifischen Enthalpie für das Befeuchten. Diese spezifischen Enthalpien werden nun noch mit den Koeffizienten (z.B. Kostenfaktoren) multipliziert, die die Anpassung an die Art der Zielfunktion gewährleisten und ihre Absolutwerte addiert. Dieser Wert, multipliziert mit dem zunächst als konstant angenommenen Wert des Zuluftstromes ergibt nach Durchlauf durch ein mathematisches Optimierungsverfahren den optimierten Zielfunktionswert.

Ein zweites bevorzugtes Ausführungsbeispiel des erfindungsgemäßen Verfahrens wird realisiert, indem die Werte der Zielfunktion für die Lösung der beiden Teilschritte dadurch bestimmt werden, dass die oben beschriebenen Bedarfsvektoren in einem t-x-Diagramm auf eine Gerade projiziert werden, die orthogonal zu der durch den Zustandspunkt des Energierückgewinners verlaufenden Isenthalpie verläuft. Die betragsmäßige Addition dieser Projektionen ist ein Maß für den Zielfunktionswert.

Zum eindimensionalen Optimierungsverfahren wird folgendes erläutert. Es kann ein einfaches eindimensionalen Suchverfahren, wie zum Beispiel das Verfahren nach dem goldenen Schnitts eingesetzt werden. Dazu wird im ersten Teilschritt ein optimaler Raumluftzustand auf den Grenzen des Behaglichkeitsgebietes gesucht. Im zweiten Teilschritt wird eine eindimensionale Suche nach dem optimalen Wert für das Steuersignal für den Energierückgewinner entlang der Geraden aller möglichen Zustandsänderungen des Energierückgewinners vorgenommen.

Eine weitere bevorzugte Ausführungsform des erfindungsgemäßen Verfahrens bei der Behandlung des ersten Teilschritts ist dadurch gekennzeichnet, dass zunächst ein Nullenergiegebiet in Abhängigkeit von der Raumlast definiert wird. Dieses Gebiet ist dadurch gekennzeichnet, dass der Zuluftsollwert allein durch Einsatz die Energierückgewinnung erreicht werden kann. Liegt der Außenluftzustand in diesem Gebiet, werden die Regler für ein Temperatur- und ein Feuchteaggregat deaktiviert, um unnötige Stellhandlungen zu vermeiden. Liegt der Außenluftzustand außerhalb des Nullenergiegebietes, wird eine eindimensionale Suche nach dem optimalen Raumluftsollwert entlang mindestens einer der Grenzen des Behaglichkeitsgebietes vorgenommen. Vorzugsweise werden vier der Grenzen abgesucht.

Eine bevorzugte Ausführungsform des erfindungsgemäßen Verfahrens bei der Behandlung des zweiten Teilschritts ist dadurch gekennzeichnet, dass ausgehend von dem im ersten Teilschritt ermittelten optimalen Raumluftsollwert das optimale Steuersignal für die Energierückgewinnung durch ein eindimensionales Optimierungsverfahren, vorzugsweise durch eindimensionale Suche ermittelt wird. Die Suche erfolgt auf einer Geraden, die alle möglichen Zustandsänderungen im t-x-Diagramm für den Energierückgewinner beschreibt. Die anderen Luftbehandlungsaggregate werden durch Regler angesteuert, deren Sollwerte durch den ersten Teilschritt vorgegeben werden.

Das erfindungsgemäße Verfahren ist auf die verschiedenen Luftbehandlungsaggregate sowie eine beliebige Aggregatreihung und Betriebsart anwendbar. Durch die Vorgabe der Koeffizienten der Zielfunktion ist diese an alle denkbaren Anforderungen wie zum Beispiel Betriebskosten, Energieverbrauch aber auch umweltrelevante Bewertungen anpassbar. Insgesamt gelingt eine optimale Ansteuerung der Klimaanlage mit solchen Verfahren, die auf einer SPS- oder DDC-Station (Speicherprogrammierbare Steuerungen; Steuerungen für die Gebäudeautomation) realisierbar sind.

Zur Durchführung des erfindungsgemäßen Verfahrens findet eine Vorrichtung Verwendung, bei der in vorzugsweise mehreren Bausteinen das Verfahren hardwaremäßig abgebildet und programmtechnisch ausgeführt wird. In zwei der wesentlichen Bausteinen kann jeweils die Ermittlung optimaler Raumluftsollwerte (Funktion 1) und die direkte Ansteuerung des Energierückgewinners (Funktion 2) implementiert sein.

Eine bevorzugte Ausführungsform der Vorrichtung in einem ersten Baustein besteht darin, dass ausgehend vom gemessenen Außenluftzustand und der Raumlast die optimalen Raumluftsollwerte gebildet und als Sollwerte für die Führungsregler einer Temperaturkaskadenregelung bzw. einer Feuchtekaskadenregelung ausgegeben werden. Außerdem ermittelt dieser Baustein binäre Freigabemeldungen für die Folgeregler dieser beiden Kaskaden. Mit diesen Freigabemeldungen werden die Regler in Abhängigkeit von den Raumluftsollwerten deaktiviert, wenn unnötige Stellhandlungen vermieden werden sollen. Die Werte für die Raumlast, d.h. Wärme- und Feuchtelast werden aus der Differenz der Sollwerte für die Führungsregler (Raum) und Folgeregler (Zuluft) nach einer Behandlung durch h-x-Module gebildet.

Die beiden Folgeregler der Kaskaden steuern über entsprechende Sequenzen die Luftbehandlungsaggregate Lufterhitzer, Luftkühler sowie Luftbefeuchter an. Eine bevorzugte Ausführungsform der im zweiten Baustein implementierten Vorrichtung besteht darin, dass ausgehend von den über den ersten Baustein ermittelten Raumluft- und Zuluftsollwerten, die aus den Sollwerten der Folgeregler der beiden Kaskaden erhalten werden, vom zweiten Baustein das Steuersignal zur direkten Ansteuerung der Energierückgewinnung ausgegeben wird.

Weitere Einzelheiten und Vorteile der Erfindung ergeben sich aus dem folgenden, anhand von Figuren erläuterten Ausführungsbeispiel. Es zeigen:

Fig. 1          ein h-x-Diagramm mit Behaglichkeitsgebiet und Luftzuständen;

Fig. 2          das h-x-Diagramm mit Darstellung des Nullenergiegebietes;

Fig. 3/4        eine Darstellung der Luftbehandlung für verschiedene Raumlasten und Abluftwerte;

Fig. 5/6        die Ermittlung der Zielfunktionswerte durch direkte Enthalpieberechnung für Kühlen bzw. Heizen;

Fig. 7          eine Gebietsdarstellung für die Startbedingung mit Steuerungsregime zur Festlegung der Startsignale für die Energierückgewinnungssteuerung;

Fig. 8          die Ermittlung der Zielfunktionswerte durch Projektion auf eine Orthogonale;

Fig. 9          eine Vorrichtung zur Bestimmung der optimalen Raumluftsollwerte;

Fig. 10         eine Zielfunktionswertermittlung für den Fall regenerativer Energierückgewinner;

Fig. 11         eine Zielfunktionswertermittlung für den Fall Luftwäscher;

Fig. 12         eine Vorrichtung für das Gesamtverfahren und

Fig. 13 bis 18  Ergebnisdarstellungen für das Berechnungsbeispiel 1.

Für das Ausführungsbeispiel soll eine Klimaanlage aus folgenden Aggregaten bestehen: Energierückgewinner und/oder Mischkammer, Vorerhitzer, Kühler, Befeuchter und Nacherhitzer. Das erfindungsgemäße Verfahren ist nicht an diese Anordnung der Luftbehandlungsaggregate beschränkt.

Die Aufgabe einer Automatisierungsanlage ist es, die Raumluftzustände Lufttemperatur $t_R$ und die relative Luftfeuchte $\varphi_R$ bzw. absolute Luftfeuchte $x_R$ im vorgegebenen Behaglichkeitsgebiet zu stabilisieren, obwohl sich die Störgrößen, ausgedrückt durch die Außenlufttemperatur $t_{AU}$ und die Außenluftfeuchte $\varphi_{AU}$ bzw. $x_{AU}$, ändern. Die Automatisierungsanlage wird Steuersignale $u_{ij}$ zur Leistungsanpassung der Luftbehandlungsaggregate ausgeben. Dies sind im einzelnen:

$u_{MK}$ = Steuersignal der Mischkammer (Außenluftanteil) oder Energierückgewinner,

$u_{VE}$ = Steuersignal des Vorerhitzers,

$u_K$ = Steuersignal des Kühlers,
$u_B$ = Steuersignal des Befeuchters und
$u_{NE}$ = Steuersignal des Nacherhitzers.

Der ökonomische und/oder ökologische Aufwand, mit dem diese Aufgabe realisiert wird, wird durch eine geeignete Zielfunktion **G** bewertet. Ohne Einschränkung der Allgemeingültigkeit soll angenommen werden, dass die bestmögliche Realisierung dann erreicht wird, wenn die Zielfunktion, deren Parameter auch ökonomische und/oder ökologische Lasten oder Kosten beschreiben, ein Minimum annimmt. Die Zielfunktion **G** ist abhängig von den Störgrößen, den Steuersignalen aber auch von den Sollwerten für die Raumluftzustände $t_{Rsoll}$ und $x_{Rsoll}$ :

$$G = G(t_{AU}, x_{AU}, u_{MK}, u_{VE}, u_K, u_B, u_{NE}, t_{Rsoll}, x_{Rsoll}) \qquad (1)$$

Die Aufgabe wird so gelöst, dass ausgehend von der Formulierung einer universellen Zielfunktion und dem Aufsuchen eines Minimums das Steuerungsproblem exakt und ohne Optimalitätsverlust in zwei Verfahrenschritte separiert wird, die seriell gelöst werden können: Zum einem in der optimierten Ermittlung der Raumluftzustände und zum anderen in der optimierten Ansteuerung der Luftbehandlungsaggregate.
Ausgangspunkt ist die Formulierung der universellen Zielfunktion (Gl.(2)):

$$G = k_{VE} \cdot h_{VE100} \cdot \dot{m}_{zu} \cdot u_{VE} + k_K \cdot h_{K100} \cdot \dot{m}_{zu} \cdot u_K + k_B \cdot h_{B100} \cdot \dot{m}_{zu} \cdot u_B + kNE \cdot h_{NE100} \cdot \dot{m}_{zu} \cdot u_{NE} \qquad (2)$$

Die $k_{kij}$ sind die Bewertungsfaktoren von Aufwandsströmen der einzelnen Luftbehandlungsaggregate. Dabei wird angenommen, dass die Mischkammer bzw. der Energierückgewinner ohne Aufwand betrieben werden kann. Dies stellt jedoch keine Einschränkung des Verfahrens dar, das auch ohne diese Annahme gültig ist. Die Bewertungsfaktoren geben in der universellen Zielfunktion die ökonomischen, energetischen und/oder ökologischen Anforderungen wieder. Wenn ohne Einschränkung der Allgemeingültigkeit die Zielfunktion als Funktion der Betriebskosten aufgefaßt wird, bedeuten im einzelnen:

$k_{VE}$ = spezifische Betriebskosten des Vorerhitzers,
$k_K$ = spezifische Betriebskosten des Kühlers,
$k_B$ = spezifische Betriebskosten des Befeuchters (Dampfbefeuchter; Luftwäscher),
$k_{NE}$ = spezifische Betriebskosten des Nacherhitzers.

Weiter sind die Enthalpiewerte:

$h_{VE100}$ = maximale, auf den Luftmassenstrom bezogene spezifische Enthalpie $\dot{m}_{zu}$, die der Vorerhitzer übertragen kann,
$h_{K100}$ = maximale spezifische Enthalpie, die der Kühler übertragen kann,
$h_{B100}$ = maximale spezifische Enthalpie, die der Befeuchter übertragen kann,
$h_{NE100}$ = maximale spezifische Enthalpie, die der Nacherhitzer übertragen kann.

Durch diese Darstellung sind die Steuersignale $u_{ij}$ auf Werte zwischen 0 und 1, bzw. bei anlagenseitigen Begrenzungen zwischen $u_{min}$ und $u_{max}$ begrenzt

$$(0 <= u_{min} <= u_{max} ; u_{min} <= u_{max} <= 1).$$

Zur vollständigen Beschreibung des Optimalsteuerungsverfahrens gehören noch die Nebenbedingungen in Gleichungs- und Ungleichungsform. Diese ausführliche Darstellung führt weit über den Gegenstand der Anmeldung hinaus, und wird hier nicht weiter beschrieben.
In die Nebenbedingungen gehen die Störgrößen $t_{AU}$, $x_{AU}$, die Steuersignale $u_{MK}$, $u_{VE}$, $u_K$, $u_B$, $u_{NE}$ und auch die Raumluftsollwerte $t_{Rsoll}$, $x_{Rsoll}$ ein. Das Optimierungsverfahren ist das Aufsuchen des Minimums:

$$\min_{u, R_{soll}} G\ (t_{AU}, x_{AU}, u_{MK}, u_{VE}, u_K, u_B, u_{NE}, t_{Rsoll}, x_{Rsoll}) \qquad (3)$$

$u = (u_{MK}, u_{VE}, u_K, u_B, u_{NE})^T$ ist der Vektor der direkten Steuervariablen und

$R_{soll} = (t_{Rsoll}, x_{Rsoll})^T$ ist der Vektor der Raumluftsollwerte. u und $R_{soll}$ bilden den Vektor der Optimierungsvariablen.

Das erfindungsgemäße Verfahren ist so angelegt, dass es ohne Verlust der Optimalität in zwei Teilschritte separiert wird:

$$\min_{u, R_{soll}} \mathbf{G}\,(t_{AU}, x_{AU}, u, R_{soll}) = \min_{u} \mathbf{G}\,(t_{AU}, x_{AU}, u, R_{soll}^{opt} = \arg\,(\min_{R_{soll}} \mathbf{G}\,(t_{AU}, x_{AU}, u, R_{soll}))) \qquad (4)$$

Das bedeutet, dass zuerst die Zielfunktion bezüglich der Raumluftsollwerte $R_{soll}$ optimiert wird. Mit den optimierten Raumluftsollwerten $R_{soll}^{opt}$ wird dann der Zielfunktionswert bezüglich der direkten Steuersignale $u_{ij}^{opt}$ optimiert. Die Ermittlung der optimierten Raumluftsollwerte ist insbesondere abhängig von der Größe des Steuersignals für die Mischkammer bzw. des Energierückgewinners.

Das erfindungsgemäße Verfahren geht das Problem so an, dass bei der Lösung des ersten Teilschritts (Ermittlung der Raumluftsollwerte) ein Startwert für das Steuersignal $u_{MK}$ vorgegeben wird. Dieser Steuersignal-Startwert $u_{MKStart}$ ist abhängig von der Lage des Außenluftzustandes AU im h-x-Diagramm und kann so festgelegt werden, dass sich eine Iteration zwischen den beiden Teiloptimierungsschritten erübrigt.

Dies führt zu der erfindungsgemäßen Aufteilung des Steuerungsverfahrens in zwei Verfahrensschritte. Dabei wird das Gesamtverfahren zur Steuerung der Lufttemperatur und der Luftfeuchte in Räumen mittels einer Vollklimaanlage mit Energierückgewinnung bzw. Mischkammer und unter Berücksichtigung eines in einem h-x-, bzw. t-x-Diagramm definierten Behaglichkeitsgebietes BG in zwei Teilschritte aufgeteilt. Im ersten Teilschritt erfolgt die Ermittlung eines optimalen Raumluftsollwertes. In dem anschließenden zweiten Teilschritt erfolgt die Ermittlung von optimierten Steuersignalen $\mathbf{u}_{ij}^{opt}$ für die Luftbehandlungsaggregate. Wobei ein geeigneter Startwert für die Steuerung des Energierückgewinners ermittelt bzw. nach vorgegebenen Kriterien (Startbedingungen) ausgewählt wird.

**Ermittlung der optimierten Raumluftsollwerte**

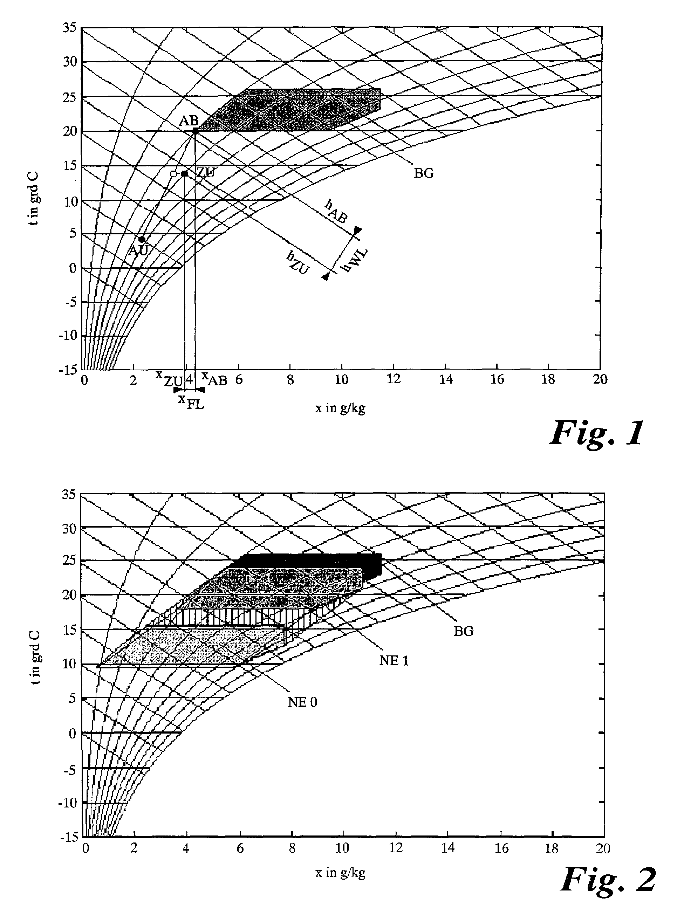

Der erste Verfahrensschritt beinhaltet die Ermittlung von optimalen Raumluftsollwerten. Dazu wird die übliche Darstellung der Luftzustände im h-x-Dia-gramm herangezogen (Fig. 1). Wichtig für die Ermittlung der Raumluftsollwerte ist das in Fig. 1 gekennzeichnete Behaglichkeitsgebiet BG. Innerhalb bzw. auf den Grenzen dieses Gebietes müssen die Raumluftzustände liegen. Die Grenzen des Behaglichkeitsgebietes sind (beispielsweise nach DIN) durch

$$20\ {}^\circ C <= t_R <= 26\ {}^\circ C\ ;\ 30\ \% <= \varphi_R <= 65\ \%\ \text{und}\ x_R <= 11{,}5\ g/kg$$

bestimmt.

Der durch $t_{AU}$, $x_{AU}$ gekennzeichnete Außenluftzustand AU kann innerhalb oder außerhalb des Behaglichkeitsgebietes liegen. In Abhängigkeit von der Lage des Außenluftzustandes AU müssen folgende Luftbehandlungsoperationen erfolgen: Heizen, Kühlen, Befeuchten, Entfeuchten. Bei richtiger Arbeitsweise der Steuerung liegt der Abluftzustand $t_{AB}$, $x_{AB}$ genau auf den Raumluftsollwerten $R_{soll}$. Durch die Luftbehandlungsoperationen muss die Luft vom Lufteintritt mit dem Außenluftzustand $t_{AU}$, $x_{AU}$ am Ende der Klimaanlage zum Zuluftzustand ZU ($t_{zu}$, $x_{zu}$) gebracht werden. Der Zuluftzustand ZU unterscheidet sich vom Abluftzustand $t_{AB}$, $t_{AB}$ durch die innere Wärmelast WL und innere Feuchtelast FL: formuliert in Gl.(5):

$$h_{zu} = h_{AB} - h_{WL}, \qquad x_{zu} = x_{AB} - x_{FL} \qquad (5)$$

Dabei sind :

$h_{zu}$ : spezifische Enthalpie der Zuluft; $h_{AB}$ : spezifische Enthalpie der Abluft

$h_{WL}$ : Wärmelast in kJ/kg; $X_{zu}$ : absolute Feuchte der Zuluft; $x_{AB}$ : absolute Feuchte der Abluft; $X_{FL}$ : Feuchtelast in g/kg.

Es soll jetzt das Problem (1. Teilschritt) - zweiter Teil aus Gl. (4) -

$$R_{soll}^{opt} = \arg(\min_{R_{soll}} \mathbf{G}(t_{AU,}\ x_{AU,}\ u,\ R_{soll})) \quad (6)$$

gelöst werden. Zunächst wird angenommen, dass lediglich das Steuersignal der Mischkammer mit $u_{MK} >= u_{MKmin}$ (Begrenzung auf minimalenAußenluftanteil) begrenzt ist.

In Abhängigkeit von den Raumlasten, gibt es um das Behaglichkeitsgebiet ein Nullenergieband, in dem der Außenluftzustand AU ohne Kosten (nur durch Mischen) in den Zuluftzustand ZU überführt werden kann. Dies ist in Fig. 2 für den Fall Kühlen und Entfeuchten dargestellt. Das Gebiet NE 1 ist das Gebiet, in dem der Außenluftanteil 100 % beträgt, das heißt, der Außenluftzustand entspricht dem Zuluftsollwert.

Das Gebiet NE 0 ist das Gebiet, aus dem der Außenluftzustand AU mit minimalem Außenluftanteil in den Zuluftzustand ZU überführt werden kann. Die beiden Gebiete NE 1 und NE 0 begrenzen das Nullenergiegebiet, in dem nur die Operation Mischen bzw. Energierückgewinnen notwendig ist. Ein vorgelagerter Schritt des Verfahrens besteht darin, die Grenzen des Nullenergiegebietes zu bestimmen und zu entscheiden, ob der Außenluftzustand AU in diesem Gebiet liegt.

Ist dies der Fall, so werden keine Raumluftsollwerte ausgegeben, da die Regler für die Raumlufttemperatur und -feuchte inaktiv sein sollen, um unnötige Stellhandlungen zu vermeiden. Es wird lediglich das Steuersignal für Mischkammer bzw. Energierückgewinner ausgegeben.

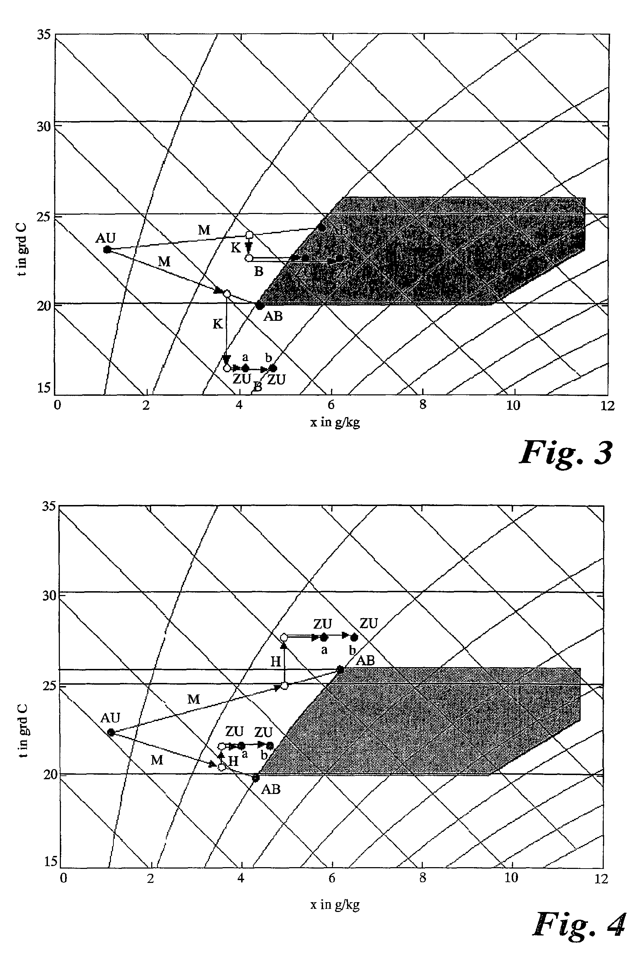

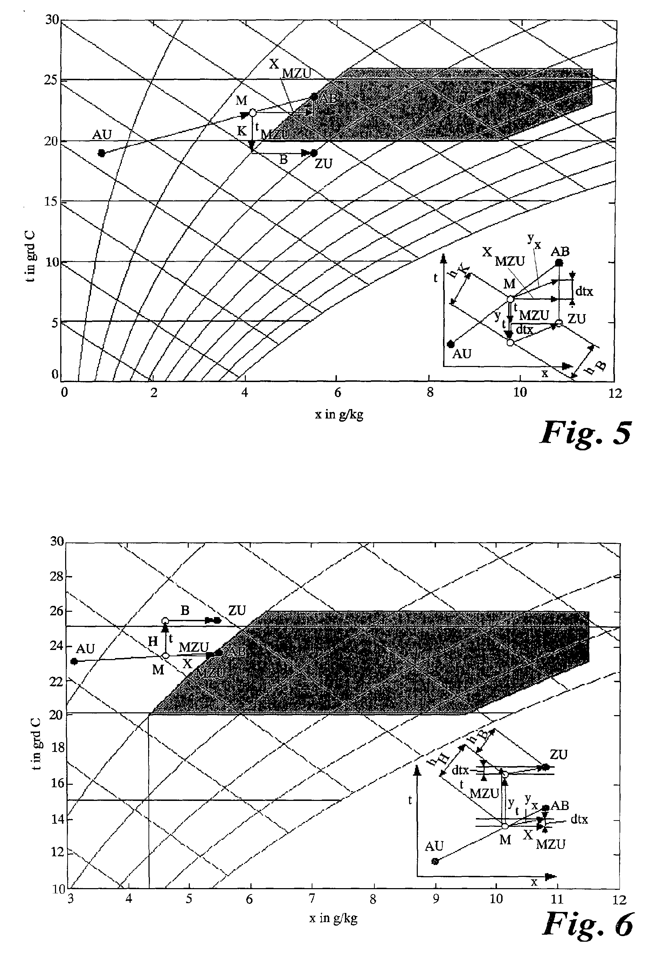

Liegt der Außenluftzustand AU nicht im Nullenergiegebiet, soll das erfindungsgemäße Verfahren für alle möglichen Raumlasten und Außenluftzustände AU eine optimale Lösung finden. Dies soll anhand von Fig. 3 und Fig. 4 erläutert werden. Es müssen die Fälle positive Wärmelast (Raumkühlung, Fig. 3) und negative Wärmelast (Raumerwärmung, Fig. 4) unterschieden werden. Außerdem werden positive und negative Feuchtelasten (Entfeuchten bzw. Befeuchten) unterschieden.

Fig. 3 beschreibt den Fall Raumkühlung und Entfeuchten (a) bzw. Befeuchten (b) für zwei verschiedene Abluftzustände AB. Hier kommen die Luftbehandlungsoperationen Mischen, Kühlen und Befeuchten zum Tragen. Wie aus der Betrachtung der zu den beiden Abluftzuständen AB gehörenden Operationen deutlich wird, herrscht ein Konflikt zwischen Kühlen und Befeuchten.

Fig. 4 stellt den Fall Raumheizung, wieder mit Entfeuchten (a) und Befeuchten (b) jeweils für zwei Abluftzustände AB dar. Hier muss gemischt, geheizt und befeuchtet werden, wodurch ein Konflikt zwischen Befeuchten und. Heizen entsteht.

Aus beiden Figuren wird deutlich, dass mit unterschiedlichen Parametern für den Abluftzustandes AB der Aufwand für die Luftbehandlungsoperationen variiert. Hier setzt das Optimierungsverfahren an: Gesucht ist der Abluftzustand AB, für den insgesamt ein minimaler Aufwand resultiert.

Das Ergebnis der Optimierung ist nun abhängig von der Lage des Außenluftzustandes AU, den Parametern für den Abluftzustand AB, der Wärme- und Feuchtelast sowie den spezifischen Kosten für Heizen, Kühlen und Befeuchten. Im Gegensatz zu bisher bekannten Verfahren wird dieses Problem exakt gelöst.

Gesucht ist der Wert des Raumluftsollwertvektors $R_{soll}$, der das Problem Gl. 6 löst. Das Optimierungsverfahren kann geometrisch interpretiert und anhand von Fig. 5 und Fig. 6 erläutert werden. Bei konstanter Zuluftmenge ist die Zielfunktion $\mathbf{G}$ von den spezifischen Enthalpien

$$h_{VE} = h_{VE100} \cdot u_{VE}\ ;\ h_K = h_{K100} \cdot u_K;\ h_B = h_{B100} \cdot u_B \text{ und } h_{NE} = h_{NE100} \cdot u_{NE}$$

abhängig.

Diese spezifischen Enthalpien kann man im h-x-Diagramm darstellen. Fig. 5 zeigt den Fall Mischen, Kühlen und Befeuchten mit Dampfbefeuchter bei positiver Wärmelast (Raumkühlung) und zunächst ohne Feuchtelast. In die Zielfunktion gehen nur die spezifischen Enthalpien

$$h_K = h_{K100} \cdot u_K \qquad \text{und} \qquad h_B = h_{B100} \cdot u_B \qquad \text{ein.}$$

Über die Nebenbedingungen ist das Steuerungsverfahren jedoch auch vom Mischluftzustand $(h_M, x_M)$ und dem Raumluftzustand, ausgedrückt durch den Abluftzustand AB abhängig. Der Sollwert $R_{soll}$ für den Abluftzustand ist die gesuchte Größe.

**Startwerte für das Steuersignal** $u_{MKstart}$

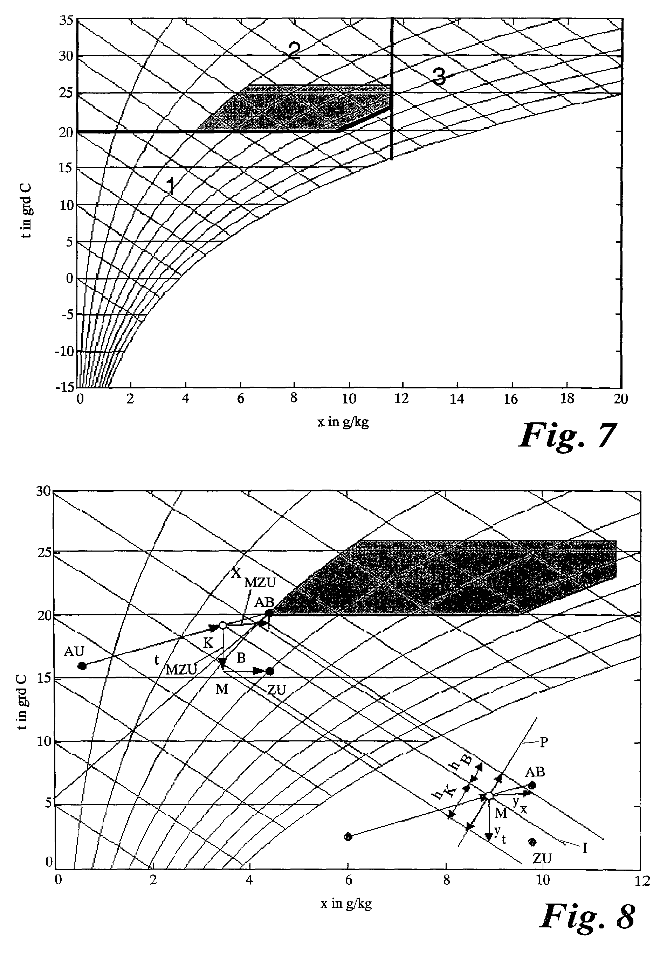

Der Weg vom Außenluftzustand AU bis zum Zuluftzustand ZU ist von der Steuerung der Mischkammer $u_{MK}$, des Kühlers $u_K$ und des Dampfbefeuchters $u_B$ abhängig. Insbesondere das Steuersignal für die Mischkammer hat einen erheblichen Einfluß, da sie die Lage des Mischpunktes M bestimmt. Hier kommt jetzt die oben beschriebene Festlegung des Startwertes des Steuersignals $u_{MK}$ zum Tragen. In Abhängigkeit von der durch Messung bekannten Lage des Außenluftzustandes AU in einem der drei in Fig. 7 gekennzeichneten Gebiete von Steuerungsregimen außerhalb des BG-Gebiets (Startbedingung) wird ein von den Parametern der Tabelle 1 bestimmter, und durch einen Algorithmus umgesetzer Startwert ausgewählt.

| Raumlast | | Außenzustand - Steuerungsregime | | | |
| --- | --- | --- | --- | --- | --- |
| Gradient Temperatur | Gradient Feuchte | Regime 1 Fig. 7 = zu kalt | Regime 2 Fig. 7 = Rest | Regime 3 Fig. 7 = zu feucht | Eckpunkt- suche im BG |
| 0 | 0 | $u_{Mkstart}=1$ | $u_{Mkstart}=1$ | $u_{Mkstart}=1$ | Nicht notwendig |
| 0 | positiv | - | - | - | - |
| 0 | negativ | - | - | - | - |
| positiv | 0 | $u_{Mkstart}=1$ | $u_{Mkstart}=1$ | $u_{Mkstart}=1$ | Nicht notwendig |
| positiv | positiv | $u_{Mkstart}=u_{MKmin}$ | $u_{Mkstart}=1$ | $u_{Mkstart}=1$ | Notwendig |
| positiv | negativ | $u_{Mkstart}=1$ | $u_{Mkstart}=u_{Mkmin}$ | $u_{Mkstart}=1$ | Nicht notwendig |
| negativ | 0 | $u_{Mkstart}=1$ | $u_{Mkstart}=1$ | $u_{Mkstart}=1$ | Notwendig |
| negativ | positiv | $u_{Mkstart}=u_{MKmin}$ | $u_{Mkstart}=1$ | $u_{Mkstart}=1$ | Notwendig |
| negativ | negativ | $u_{Mkstart}=1$ | $u_{Mkstart}=1$ | $u_{Mkstart}=1$ | Notwendig |

Tabelle 1: Startbedingung und Steuerregime für die Werte der Startsignale $u_{MK}$ und Entscheidung über Einschluss der Eckpunkte des Behaglichkeitsgebietes für die eindimensionale Suche mit Bezug auf Fig. 7 für die Außenzustände.

Die Tabelle 1 ist folgendermaßen zu interpretieren: Die bekannten Raumlasten, d.h. Wärme- und Feuchtelast werden an den Pol (Koordinatenursprung) des h-x-Diagramm angelegt. Dadurch wird ein neuer Punkt bestimmt. Dieser Punkt hat gegenüber dem Pol eine Temperatur- und eine Feuchteänderung. Die Richtung dieser Änderung (Gradient) wird mit Null, positiv oder negativ bewertet. Damit und mit der Gebietsdefinition von Steuerungsregimen nach Fig. 7 ist die Tabelle 1 vollständig bestimmt. Die damit gegebenen Größen werden als Algorithmus niedergelegt.

Durch die erfindungsgemäße Festlegung dieser Startwerte wird eine ansonsten notwendige Iteration zwischen den beiden Teilschritten vermieden. Somit sind nur noch die Steuersignale $u_K$ (Kühler) und $u_B$ (Befeuchter) sowie der Abluftzustand AB variabel.

**Ermittlung der optimalen Raumluftsollwerte**

Realisierungsvariante 1

Mit der Erfindung wird das Optimierungsverfahren zu einem einfach geometrisch zu interpretierenden Verfahren, das anhand von Fig. 5 erläutert wird. Dabei erfolgt die Ermittlung des optimierten Raumluftsollwertes durch die zyklische Berechnung eines Zielfunktionswertes in einem t-x-Diagramm. Abhängig von einer von Raumlast und Außenzustand bestimmter Startbedingung wird ein Startsignal für den Mischpunkt M definiert, und dann Bedarfswerte für die Temperatur- und Feuchtebehandlung als vektorielle Differenz zwischen dem Mischpunkt M und dem durch Raumlast und den Abluftzustand AB bestimmten Zuluftsollwert gebildet. Die Bedarfswerte werden mit den Richtungsvektoren für die Luftbehandlungsoperationen multipliziert und an den Mischpunkt M im t-x-Diagramm angelegt. Die spezifischen Enthalpien werden für die Endpunkte dieser Bedarfsvektoren $y_x$, $y_t$ berechnet. Aus der Differenz dieser Werte multipliziert mit spezifischen Bewertungsfaktoren, die die Anpassung an die jeweilige Zielfunktion realisieren, wird der Zielfunktionswert als Zwischenwert berechnet und die lineare Optimierung fortgesetzt bis der optimierte Raumluftsollwert erreicht ist.

Für einen beliebigen, aber bekannten Abluftzustand AB ergibt sich mit dem Startwert für das Steuersignal $u_{MK}$ der Mischpunkt M, der den Luftzustand nach der Mischkammer kennzeichnet. Von diesem Punkt aus muss der bekannte Zuluftzustand ZU erreicht werden. Die beiden Größen $t_{MZU}$ und $x_{MZU}$ stellen die Temperatur- bzw. die Feuchtedifferenz zwischen diesen beiden Zuständen dar. Ausgehend von diesen beiden Vektoren werden die Bedarfsvektoren für die Temperaturbehandlung $y_t$ und die Feuchtebehandlung $y_x$ gebildet.

Dies geschieht folgendermaßen: Der Bedarfsvektor $y_x$ wird durch Multiplikation des Vektors $x_{MZU}$ mit dem Richtungsvektor für die Befeuchtung erhalten (in diesem Fall Dampfbefeuchtung: Anstieg im h-x-Diagramm = spezifische Enthalpie des Dampfes). Im Fall des Dampfbefeuchters verläuft dieser Bedarfsvektor annähernd entlang der Isothermen. Bei genauer Betrachtung enthält der Vektor $y_x$ einen Temperaturanteil dt.

Dieser Wert muss zu dem Vektor $t_{MZU}$ hinzugefügt werden und ergibt somit den Bedarfsvektor $y_t$.

In einem t-x-Diagramm werden diese Bedarfsvektoren an den Mischpunkt M angelegt. Jetzt werden durch ein h-x-Modul die spezifischen Enthalpien für den Mischpunkt M und die Endpunkte des Temperaturbedarfsvektors $y_t$ sowie für den Zuluftsollwert gebildet.

Die Differenz zwischen der spezifischen Enthalpie am Mischpunkt M und der am Endpunkt des Temperaturbedarfsvektors ist die spezifische Enthalpie für die Wärmebehandlung $h_K$ (in Fig. 5). Analog ist die Differenz zwischen spezifischer Temperatur am Endpunkt des Temperaturbedarfsvektors und der spezifischen Enthalpie des Zuluftsollwertes gleich der spezifischen Enthalpie für das Befeuchten $h_B$. Diese spezifischen Enthalpien werden nun noch mit den Kostenfaktoren multipliziert und ihre Absolutwerte addiert. Dieser Wert, multipliziert mit dem zunächst als konstant angenommenen Wert des Zuluftstromes ergibt nach vollständigem Durchlauf durch das lineare Optimierungsverfahren den optimalen durch den Zielfunktionswert bestimmten Raumluftsollwert.

Fig. 6 veranschaulicht das Verfahren für den Fall Heizen analog.

**Ermittlung der optimalen Raumluftsollwerte**

Realisierungsvariante 2

Eine zweite Realisierungsvariante des erfindungsgemäßen Verfahrens wird anhand von Fig. 8 für den Fall einer positiven Wärmelast mit Mischen, Kühlen und Befeuchten beschrieben. Hierfür erfolgt die Ermittlung im zyklischen Durchlauf des eindimensionalen Optimierungsverfahrens des optimalen Raumluftsollwertes durch die Berechnung eines Zielfunktionswertes in einem t-x-Diagramm, indem ausgehend von einem durch die Startbedingung definierten Startwert des Steuersignals für den Mischpunkt M Bedarfswerte für die Temperatur- und Feuchtebehandlung als vektorielle Differenz zwischen dem Mischpunkt M und dem durch die Raumlast und den Abluftzustand AB bestimmten Zuluftsollwert ZU gebildet werden, die Bedarfswerte mit den Richtungsvektoren für die Luftbehandlungsoperationen sowie spezifischen Bewertungsfaktoren k, die die Anpassung an die jeweilige Zielfunktion realisieren, multipliziert und an den Mischpunkt M im t-x-Diagramm angelegt werden. Die so ermittelten Bedarfsvektoren $y_x$, $y_t$ werden auf eine Projektionsgerade P projiziert, die orthogonal zu der Isenthalpie I durch den Mischpunkt M verläuft und durch skalare Addition der Beträge dieser Projektionswerte $h_K$, $h_B$ die Zielfunktionswerte (als Zwischenwerte) gebildet werden. Den Ausgangspunkt bilden wieder die Bedarfsvektoren für Temperatur und Feuchte.

Diese Vektoren werden mit den spezifischen Kosten multipliziert und in einem t-x-Diagramm an den Mischpunkt M angetragen. Diese so entstehenden Vektoren werden auf eine Gerade projiziert, die senkrecht zur Isenthalpie für den Mischpunkt M verläuft. Die projizierten Vektoren bilden auf dieser Geraden eine Abbildung für die exakten Werte der spezifischen Enthalpien $h_K$ und $h_B$. Die betragsmäßige (nicht vektorielle) Addition dieser Werte unterscheidet sich von der Zielfunktion nur durch den Wert der konstanten Zuluftmenge und einer weiteren Konstanten, die den unterschiedlichen Anstieg der Isenthalpien im h-x- und im t-x-Diagramm ausdrückt. Der zyklische Durchlauf durch das Optimierungsverfahren verläuft bis Erreichen des optimalen Werts.

Damit kann in beiden Realisierungsvarianten des Verfahrens der Zielfunktionswert mit den bekannten Werten für den Außenluft-, Abluft- und Zuluftzustand AU, AB, ZU berechnet werden und ist bei konstantem Außenluftanteil und konstanter Wärme- bzw. Feuchtelast nur noch vom Abluftzustand AB abhängig. Das Optimierungsverfahren, d. h. die Bestimmung des oben als bekannt vorausgesetzten Abluftzustandes AB ist somit nur noch ein eindimensionales Problem, das leicht gelöst werden kann.

**Raumluftsollwert auf den Grenzen des Behaglichkeitsgebietes**

Der optimale Abluftzustand AB muss auf den Grenzen des Behaglichkeitsgebietes liegen, so dass es gilt, eine eindimensionale Optimierung mathematisch auszudrücken. Um mit dem Verfahren auch komplizierte Raumlasten exakt zu erfassen, muss die Optimierung auf allen Begrenzungen des Behaglichkeitsgebietes erfolgen, ausgenommen die Grenze x = 11,5 g/kg. Damit muss ein eindimensionales Optimierungsverfahren viermal eingesetzt werden. Bei Verringerung der Genauigkeit wäre auch eine Beschränkung auf weniger als vier Begrenzungen möglich. Auf den Grenzen des Behaglichkeitsgebietes ist der optimale Raumluftsollwert $R_{opt}$ zu suchen, der den Zielfunktionswert minimiert. Dazu gibt es bekannte und einfache Optimierungverfahren. Beispielsweise kann das Suchverfahren nach dem goldenen Schnitt angewendet werden. Ausgehend von den Endpunkten eines Streckenabschnittes werden im Suchverfahren nach dem goldenen Schnitt Intervalle gebildet und die Zielfunktionswerte untereinander an den Intervallgrenzen verglichen. Das Suchverfahren teilt immer weiter, bis eine vorgegebene Iterationsgenauigkeit unterschritten wird. Die Anzahl der notwendigen Schritte ist abhängig von der gewünschten Genauigkeit und lässt sich gut abschätzen. So werden zum Beispiel neun Schritte notwendig, um eine für technische Zwecke ausreichende Genauigkeit von $10^{-02}$ zu erreichen.

Das gewählte eindimensionale Suchverfahren ist noch etwas zu modifizieren. Umfangreiche Untersuchungen des Zielfunktionsgebirges haben gezeigt, dass es singuläre Punkte auf den Grenzen des Suchintervalls geben kann, die ein hier gefordertes Suchverfahren auch finden soll. Aus diesem Grund wird das Optimierungsverfahren so modifiziert, dass explizit auf beiden Grenzen des Intervalls die Zielfunktionswerte berechnet und mit dem Ergebnis der Suche innerhalb der Intervallgrenzen verglichen werden.

Das erfindungsgemäße Verfahren ist allgemein für alle Betriebsfälle (Wärmelasten, Feuchtelasten) und Aggregatreihungen (insbesondere auch für Dampfbefeuchter und Luftwäscher) anwendbar. Im Unterschied zu den bisher bekannten Verfahren kommt im vorliegenden Fall die Optimierung mit vertretbarem Aufwand zu einem exakten Ergebnis. Der Algorithmus kann mit wirtschaftlichem Aufwand auf den gebräuchlichen Automatisierungsgeräten der Gebäudeautomation realisiert werden. Die Nachteile der Verwendung von Reglerausgängen zur Abschätzung des Kostenaufwandes werden hier vermieden. Somit ist man mit diesem Verfahren frei in der Wahl der Reglerstruktur. Der Zuluftregler muß also nicht mehr ein PID-Regler sein. Es sind sogar völlig andere Regleralgorithmen, wie zum Beispiel Fuzzy-Regler oder neuronale Netze vorstellbar.

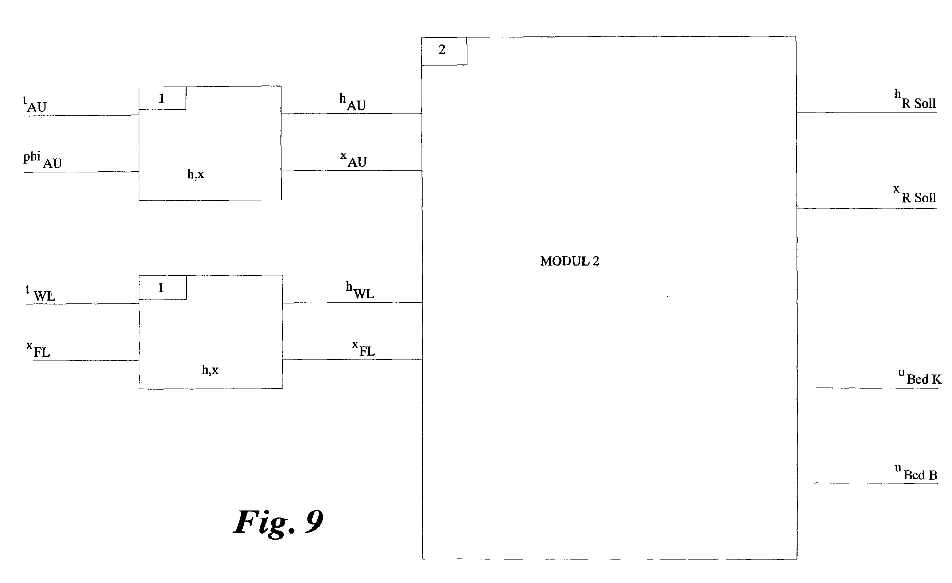

Fig. 9 zeigt ein Schema für eine Vorrichtung zur Realisierung des Verfahrens, insbesondere mit Darstellung der notwendigen Eingangsinformationen. Aus den Meßwerten für Außentemperatur $t_{AU}$ und der relativen Feuchte der Außenluft $\Phi_{AU}$ werden die Werte für $h_{AU}$ und $x_{AU}$ in einem gebräuchlichen Elektronik-Baustein für die Berechnung der Luftzustände (Baustein 1) implementiert und programmtechnisch ausgeführt.

Für die Ermittlung des Zuluftzustandes ZU werden intern die Beziehungen

$$h_{zu} = h_{AB} - h_{WL}, \quad x_{zu} = x_{AB} - x_{FL} \qquad (5)$$

benutzt. Dazu sind die Werte für die Wärmelast $h_{WL}$ und die Feuchtelast $x_{FL}$ notwendig. Entweder sind diese Werte bekannt und konstant oder sie müssen aus den Werten $t_{WL}$ und $X_{FL}$ über das h-x-Modul berechnet werden. Dabei sind $t_{WL}$ und $x_{FL}$ Differenzen zwischen Raumluft- und Zulufttemperatur bzw. Raumluft- und Zuluftfeuchte. Diese Werte können im eingeschwungenen Zustand aus den Sollwerten der entsprechenden Regler erhalten werden. Beim Start der Abarbeitung des Algorithmus sollten hier die Auslegungswerte eingegeben werden. Alle anderen Eingangsinformationen in dem eigentlichen Algorithmus (implementiert in Baustein 2; MODUL 2) sind bekannte konstante Parameter. Ausgangsinformationen des Bausteins 2 sind die Sollwerte für den Raumluftzustand $h_{Rsoll}$ und $x_{Rsoll}$ sowie die binären Bedarfssignale für den Kühler und den Befeuchter, oder alternativ Freigabesignale für die beiden Folgeregler.

Das Verfahren ist nicht auf einen konstanten minimalen Außenluftanteil beschränkt. Bei veränderlichem minimalen Außenluftanteil wird $u_{MKmin}$ variabel. Der Algorithmus berücksichtigt den jeweiligen Wert von $u_{MKmin}$. Für die Dauer der Lösung des Optimierungsverfahrens wird dieser Wert jedoch als konstant angenommen.

**Optimierte Ansteuerung der Luftbehandlungsaggregate**

Der zweite Verfahrensschritt löst nun das zweite Teilproblem der Optimalsteuerung:

$$\min_{u} G(t_{AU,}\, x_{AU},\, u,\, R_{soll}^{opt}) \qquad (7)$$

mit

$$G = k_{VE} \cdot h_{VE_{100}} \cdot \dot{m}_{zu} \cdot u_{VE} + k_K \cdot h_{K_{100}} \cdot \dot{m}_{zu} \cdot u_K + k_B \cdot h_{B_{100}} \cdot \dot{m}_{zu} \cdot u_B + k_{NE} \cdot h_{NE_{100}} \cdot \dot{m}_{zu} \cdot u_{NE}$$

Dabei wird jetzt der optimale Raumluftsollwert vorausgesetzt, bzw. verwendet. Die Behandlung ist analog zu dem schon beschriebenen ersten Verfahrensschritt. Die Optimierung kann wieder geometrisch dargestellt und interpretiert werden. Auch hier sind die beiden beschriebenen Realisierungsvarianten anwendbar.

Das erfindungsgemäße Verfahren soll mit der Realisierungsvariante Projektion der Bedarfsvektoren vorgestellt werden. Dies soll anhand von Fig. 8 erfolgen.

Es erfolgt auch hier im zyklischen Durchlauf des eindimensionalen Optimierungsverfahrens die Ermittlung des optimalen Steuersignals $\mathbf{u}_{ij}^{opt}$ für die Mischkammer beziehungsweise für den Energierückgewinner durch die Berechnung eines Zielfunktionswertes in einem t-x-Diagramm. Ausgehend von einem durch die Startbedingungen definierten Startwert des Steuersignals für den Mischpunkt M werden Bedarfswerte für die Temperatur- und Feuchtebehandlung als vektorielle Differenz zwischen dem Mischpunkt M und dem durch die Raumlast und den Abluftzustand AB bestimmten Zuluftsollwert gebildet. Die Bedarfswerte werden mit den Richtungsvektoren für die Luftbehandlungsoperationen sowie spezifischen Bewertungsfaktoren k multipliziert, die die Anpassung an die jeweilige Zielfunktion realisieren, und an den Mischpunkt M im t-x-Diagramm angelegt. Die so ermittelten Bedarfsvektoren $y_x$, $y_t$ werden auf eine Projektionsgerade P projiziert, die orthogonal zu der Isenthalpie I durch den Mischpunkt M verläuft. Anschließend werden durch skalare Addition der Beträge dieser Projektionswerte $h_K$, $h_B$ die Zielfunktionswerte gebildet. Im zyklischen Durchlauf des Optimierungsverfahrens werden so Zwischenwerte für die angestrebten Steuersignale gebildet und der zyklische Durchlauf bis zum Erreichen der optimalen Steuersignale $u_{ij}^{opt}$ fortgesetzt.

Es wird ohne Einschränkung der Allgemeingültigkeit eine positive Wärmelast und keine Feuchtelast zugrunde gelegt. Der Abluftzustand AB ist durch den optimierten Raumzustand nach dem ersten Verfahrensschritt vorgegeben. Wie ersichtlich ist, müssen die Operationen Mischen, Kühlen und Befeuchten (dargestellt Dampfbefeuchter) ausgeführt werden. Die für die Optimierung interessante Größe ist das Steuersignal für die Mischkammer, da hiermit sowohl die Temperatur als auch die Feuchte beeinflußt wird. Die beiden übrigen Operationen Kühlen und Befeuchten sind eindeutig einem Aggregat zuzuordnen, so dass die Ansteuerung dieser Aggregate über jeweils einen Regler erfolgen kann, der als Sollwerte den jeweiligen Sollwert für den Zuluftzustand ZU bekommt.

Bei wiederum angenommenem konstanten Luftstrom, ist die Zielfunktion abhängig von den spezifischen Enthalpien:

$$h_{VE} = h_{VE_{100}} \cdot u_{VE}\; ; h_K = h_{K_{100}} \cdot u_K\; ; h_B = h_{B_{100}} \cdot u_B \text{ und } h_{NE} = h_{NE_{100}} \cdot u_{NE}.$$

Diese können nun wieder geometrisch dargestellt werden.

Ausgehend vom Mischpunkt M, der zunächst als variabel angenommen wird, ergeben sich wieder die Vektoren $t_{MZU}$ und $X_{MZU}$. Aus diesen Vektoren werden Bedarfsvektoren für die Temperaturbehandlung $y_t$ und die Feuchtebehandlung $y_x$ gebildet. Dies geschieht analog zu der oben beschriebenen Behandlung:

Der Bedarfsvektor $y_x$ wird durch Multiplikation des Vektors $x_{MZU}$ mit dem Richtungsvektor für die Befeuchtung erhalten. Im Fall des Dampfbefeuchters verläuft dieser Bedarfsvektor wieder annähernd entlang der Isothermen. Bei genauer Betrachtung enthält der Vektor $y_x$ einen Temperaturanteil, dieser Wert muss zu dem Vektor $t_{MZU}$ hinzugefügt werden und ergibt somit den Bedarfsvektor $y_t$. Diese beiden Bedarfsvektoren werden an den Mischpunkt M angelegt. Jetzt werden diese Vektoren noch mit den spezifischen Kosten multipliziert. Diese so entstehenden Vektoren werden auf eine Gerade, die senkrecht zur Isenthalpie für den Mischpunkt M verläuft, projiziert. Die projizierten Vektoren bilden auf dieser Geraden eine Abbildung für die exakten Werte der spezifischen Enthalpien $h_K$ und $h_B$. Die Beträge der Abschnitte werden addiert und ergeben einen Wert, der proportional zur Zielfunktion ist. Dieser Wert ist nun noch von der Lage des Mischpunktes M abhängig, was eine eindimensionale Abhängigkeit bedeutet. Es ergibt sich somit wieder ein eindimensionales Optimierungsverfahren.

Analog zu der schon beschriebenen Behandlung kann dieses Optimierungsverfahren durch Suche auf dem Geradenabschnitt im t-x-Diagramm, der die Mischkammer repräsentiert, also von AU bis AB gelöst werden, wobei die Begrenzung $u_{MKmin}$, d.h. der minimale Außenluftanteil, berücksichtigt werden muss. Die Ermittlung des optimalen Steuersignals $u_{MK}$ für die Mischkammer beziehungsweise für den Energierückgewinner erfolgt wie zuvor bereits beschrieben durch die Berechnung eines Zielfunktionswertes in einem t-x-Diagramm.

Auch hier kann wieder ein beliebiges eindimensionales Suchverfahren (zum Beispiel nach dem goldenen Schnitt) angewendet werden. Die Behandlung einer negativen Wärmelast geschieht völlig analog und soll hier nicht dargestellt werden. Ebenso ist die Berücksichtigung von Feuchtelasten ohne Änderungen des Verfahrens möglich.

Für bestimmte Kombinationen von Außenluftzustand AU und Raumlasten können die optimalen Abluftsollwerte genau auf den Eckpunkten des Behaglichkeitsgebietes liegen. Diese Punkte werden unter Umständen nicht durch die serielle Lösung der beiden Teilschritte gefunden. Deshalb müssen für die oben erwähnten Kombinationen alle Eckpunkte des Behaglichkeitsgebietes abgesucht werden. Das bedeutet, dass für diese Eckpunkte die Steuersignale für die Mischkammer ermittelt, die Zielfunktionswerte berechnet und mit dem bisherigen Ergebnis verglichen werden müssen.

Ein Vorteil des erfindungsgemäßen Verfahrens ist, dass von vornherein entschieden werden kann, ob die zusätzliche Suche unter Einschluss der Eckpunkte notwendig ist. Diese Entscheidung ist korreliert mit den vorgefundenen Startbedingungen und den dadurch bedingten Wert des Startsignals für $u_{MK}$ und kann analog vorgenommen werden. Dies wird - wie schon zuvor beschrieben - über die Tabelle 1 abgewickelt.

Das erfindungsgemäße Verfahren kann für alle wesentlichen Aggregatreihungen und Betriebsfälle angewendet werden.

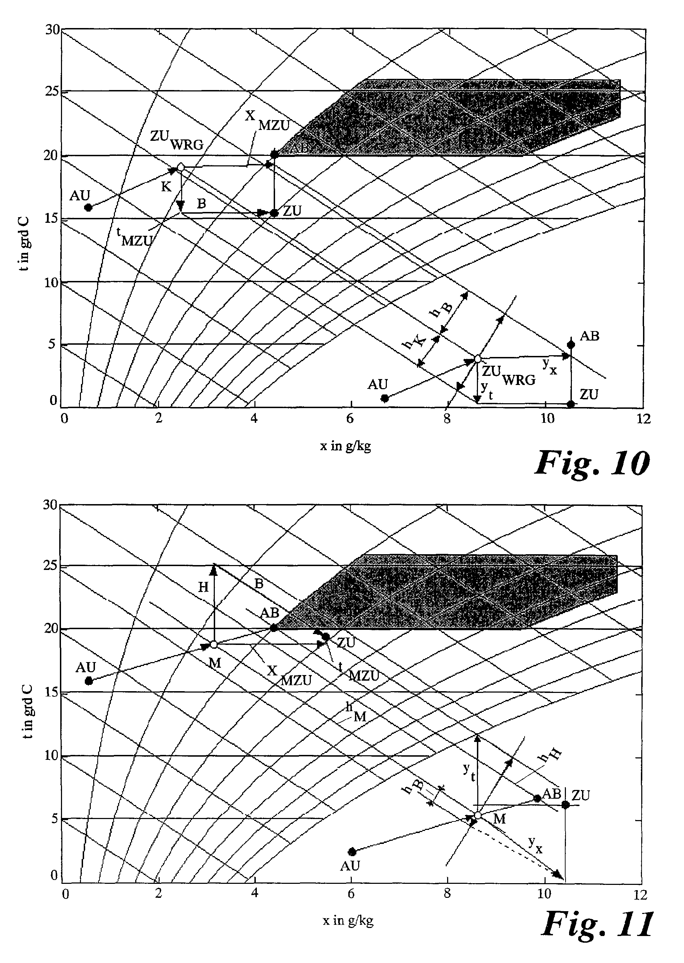

Anstelle der Mischkammer kann auch ein Energierückgewinner (ERG, bzw. WRG) eingesetzt werden (Fig. 10). Wenn der Abluftzustand AB mit der Rückwärmezahl $\Phi_{t2}$ bzw. der Rückfeuchtezahl $\Phi_{x2}$ bewertet wird, ergibt sich ein neuer maximal möglicher Ausgangszustand des Energierückgewinners $ZU_{WRG}$. Die Punkte AU und $ZU_{WRG}$ bilden nun einen Geradenabschnitt im t-x-Diagramm, der alle möglichen Zustandsänderungen durch den Energierückgewinner beschreibt. Analog zur Optimierung der Steuersignale für die Mischkammer (Mischpunkt M) erfolgt entlang dieses Geradenabschnittes die eindimensionale Optimierung. Die optimale Zustandsgröße für den Energierückgewinner liegt auf diesem Geradenabschnitt.

Dies ist in Fig. 10 beispielhaft dargestellt. Damit ist die Behandlung rekuperativer und regenerativer Energierückgewinner möglich. Bei den anderen Aggregatreihungen ergeben sich ebenfalls keine Beschränkungen. So ist die Befeuchtung mit Dampfbefeuchter oder Luftwäscher möglich. Hier unterscheiden sich nur die Richtungen der Bedarfsvektoren.

In Fig. 11 ist Mischen sowie Befeuchtung durch den Luftwäscher im Fall negativer Wärme- und Feuchtelast dargestellt. Der Bedarfsvektor $y_x$ unterscheidet sich jetzt von dem im Fall des Dampfbefeuchters. Da die Befeuchtung entlang der Nebelisothermen für die Wassertemperatur erfolgt, erhält dieser Bedarfsvektor einen deutlichen Temperaturanteil.

Der Bedarfsvektor $y_x$ wird durch Multiplikation des Vektors $x_{MZU}$ mit dem Richtungsvektor für die Befeuchtung (Anstieg der Nebelisothermen) erhalten. Der Vektor $y_x$ enthält einen Temperaturanteil, dieser Wert muss zu dem Vektor $t_{MZU}$ hinzugefügt werden und ergibt somit den Bedarfsvektor $y_t$.

Die bisher angenommene Einschränkung, dass der Zuluftvolumenstrom konstant sein soll, kann ebenfalls aufgehoben werden. Bei variablem Volumenstrom der Zuluft ergeben sich zusätzlich die Kosten der Ventilatorenleistungen.

Die Zielfunktion erhält einen neuen Term:

$$G = k_{ZU} \cdot \Delta p / \eta \cdot \dot{m}_{zu} \cdot \rho_{zu} + k_{VE} \cdot h_{VE_{100}} \cdot \dot{m}_{zu} \cdot u_{VE} + k_K \cdot h_{K_{100}} \cdot \dot{m}_{zu} \cdot u_K + k_B \cdot h_{B_{100}} \cdot \dot{m}_{zu} \cdot u_B + k_{NE} \cdot h_{NE_{100}} \cdot \dot{m}_{zu} \cdot u_{NE}$$

Mit: $k_{zu}$ = spezifische Kosten der Ventilatoren (Zu- und Abluftventilatoren werden gemeinsam betrachtet); $\Delta p$ = Druckerhöhung; $\eta$ = Wirkungsgrad; $\rho_{zu}$ = Dichte der Zuluft.

Somit entsteht auch die neue Steuerungsvariable $m_{zu}$. Die Untersuchung der Zielfunktion ergibt, dass der Zuluftvolumenstrom ständig minimal sein sollte. Dies ergibt folgende Strategie: Bei zunächst minimalem (und damit konstanten) Volumenstrom werden die beschriebenen Verfahrensschritte der Steuerung angewendet. Erst wenn die Aggregate an den Grenzen der zulässigen Temperaturspreizungen angelangt sind, wird der Volumenstrom erhöht. Dies ist ein als variables Volumenstromsystem (WS) bekanntes Verfahren, das herkömmlich durch eine Sequenz des Führungsreglers der Temperaturkaskade realisiert wird.

Somit kann diese Steuerungsvariable der Regelung zugeordnet werden. Das zuvor beschriebene Verfahren wird dann unverändert angewendet. Damit wird hier ein Verfahren beschrieben, das universell und exakt die Steuerungsaufgabe unter Optimierungsaspekt löst.

**Vorrichtung**

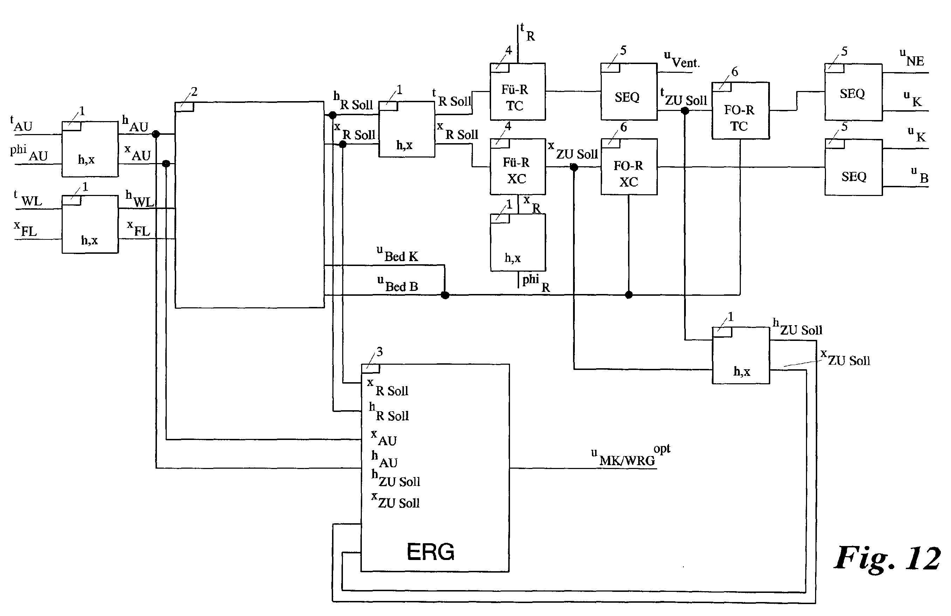

Im folgenden soll eine Vorrichtung zur Realisierung der Erfindung beschrieben werden (Fig. 12). Die Vorrichtung besteht im wesentlichen aus einer Steuerung - vorzugsweise einer SPS - mit deren Hilfe hardwaremäßig und programmtechnisch das erfindungsgemäße Verfahren realisiert wird. Hierfür werden bevorzugt in einzelnen programmierbaren Elektronikbausteinen die verschiedenen Verfahrensschritte "Ermittlung der optimalen Raumluftsollwerte", "optimale Steuerung der Luftbehandlungsaggregate" und "Ermittlung eines Startsignals" hardwaremäßig implementiert und programmtechnisch abgearbeitet.

Die Anordnung wird beispielhaft für die Aggregatreihung: Mischkammer/ERG, Vorerhitzer, Kühler, Dampfbefeuchter und Nacherhitzer dargestellt. Wie bereits zu Fig. 9 ausgeführt, liefert der Baustein 2 die optimalen Raumluftsollwerte und die binären Bedarfssignale für den Kühler und den Befeuchter. Die optimalen Raumluftsollwerte sind die Eingangsinformationen für den Baustein 3, in dem das Verfahren zur optimalen Ansteuerung der Mischkammer/des ERG implementiert ist und dort abgearbeitet wird. Weitere Eingangssignale sind der Außenluftzustand AU ($h_{AU}$, $x_{AU}$) und die Sollwerte für den Zuluftzustand ZU ($h_{Zusoll}$ und $x_{Zusoll}$), die als Ausgangssignale der Führungsregler für Raumtemperatur und -feuchte vorliegen. Ausgangssignal des Bausteins 3 ist das Signal für die direkte Ansteuerung der Mischkammer/des ERG.

Die Aggregate Kühler, Befeuchter und Nacherhitzer, sowie im Fall der Volumenstromsystems (VVS) die Ventilatoren werden - wie konventionell üblich - durch jeweils eine Kaskade für die Raumtemperatur- und -feuchteregelung mit entsprechenden Sequenzen angesteuert. In Fig. 12 bedeuten: Fü-R: Führungsregler; Fo-R: Folgeregler der Kaskade; TC: Temperaturregelung; XC: Feuchteregelung; SEQ: Sequenzbaustein.

Der Unterschied zu den herkömmlichen Automatisierungsstrukturen besteht darin, dass die Mischkammer/ der ERG direkt, also nicht über Sequenzen angesteuert werden. Durch die binären Bedarfssignale werden Kühler und Befeuchter zu- oder abgeschaltet. Durch die im Baustein 2 realisierten Steuerungsstrategien wird verhindert, dass sowohl der Temperatur- als auch der Feuchteregler auf den Kühler zugreifen. Damit wird auch die sonst übliche Maximumauswahl nicht nötig. Sie kann aber auch ohne Nachteil - wie gewohnt - vorgesehen werden. Der Vorerhitzer wird über eine Vorregelung in Form einer Temperaturregelung mit konstantem Sollwert (beispielsweise 18 °C) angesteuert.

Mit dieser Anordnung wird eine exakte optimale Steuerung der Klimaanlage erreicht. Dies kann anhand von Beispielrechnungen nachgewiesen werden:

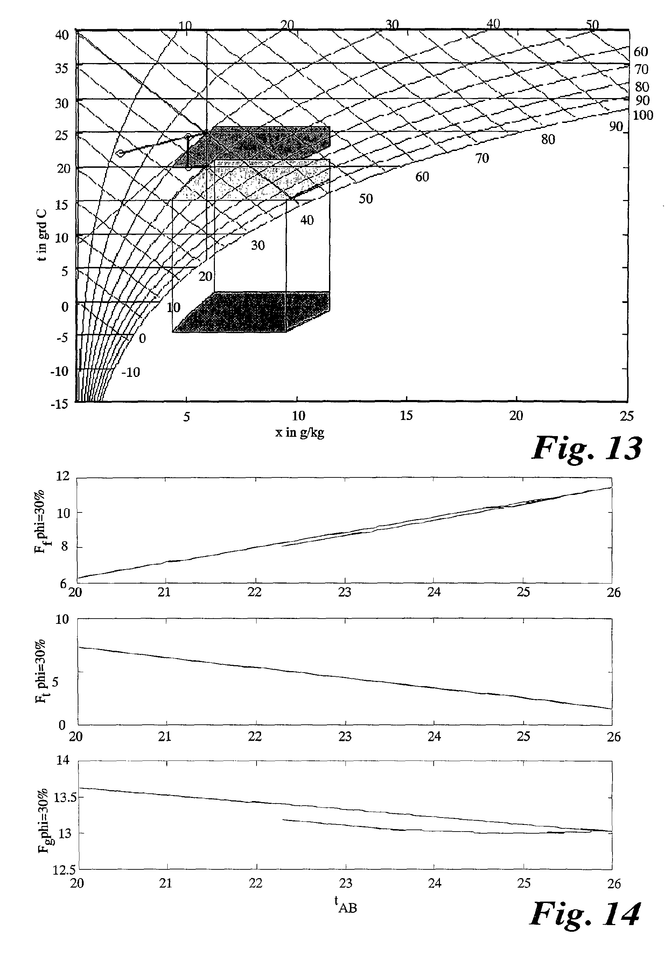

Beispielrechnung 1 (Fig. 13 bis Fig. 18)

Die zugrunde gelegte Aggregatreihung ist: Mischkammer, Vorerhitzer, Kühler, Dampfbefeuchter, Nacherhitzer. Folgende Ausgangsdaten wurden der Beispielrechnung zugrunde gelegt: Außenluftzustand: $t_{AU}$ = 22 °C; $x_{AU}$ = 2 g/kg; alle spezifischen Kosten gleich; keine Feuchtelast ( phi = const.); Wärmelast = 5 kJ/kg (Kühlfall); in Tab. 1 Regime 2 mit $u_{MKstart}$=1.

Für diese Ausgangsdaten wurde das erfindungsgemäße Verfahren (lineares Optimierungverfahren) mit einer exakten mathematischen Optimierungsrechnung unter Verwendung eines umfangreichen Modells verglichen.

Zunächst wird der optimale Raumluftzustand ermittelt. Der Startwert für das Steuersignal wird aus Tab. 1 übernommen. Mit diesem Wert wird der optimale Abluftzustand AB ermittelt. Das Ergebnis zeigt Fig.13. Im Gegensatz zu allen bekannten Verfahren ermittelt das erfindungsgemäße Verfahren ein (wenn auch schwaches) Optimum auf der Linie $\phi$ = 30 %. Die Suche wird auf allen vier Begrenzungen des Behaglichkeitsgebietes vorgenommen und der optimale Punkt auf der Begrenzung mit $\phi$ = 30 % ermittelt. Fig. 14 stellt den Verlauf des Aufwandes für die Befeuchtung $F_{feucht}$, für das Kühlen $F_{temp}$ sowie den Gesamtaufwand $F_{gesamt}$ bei der Suche entlang der Linie $\phi$ = 30 % dar.

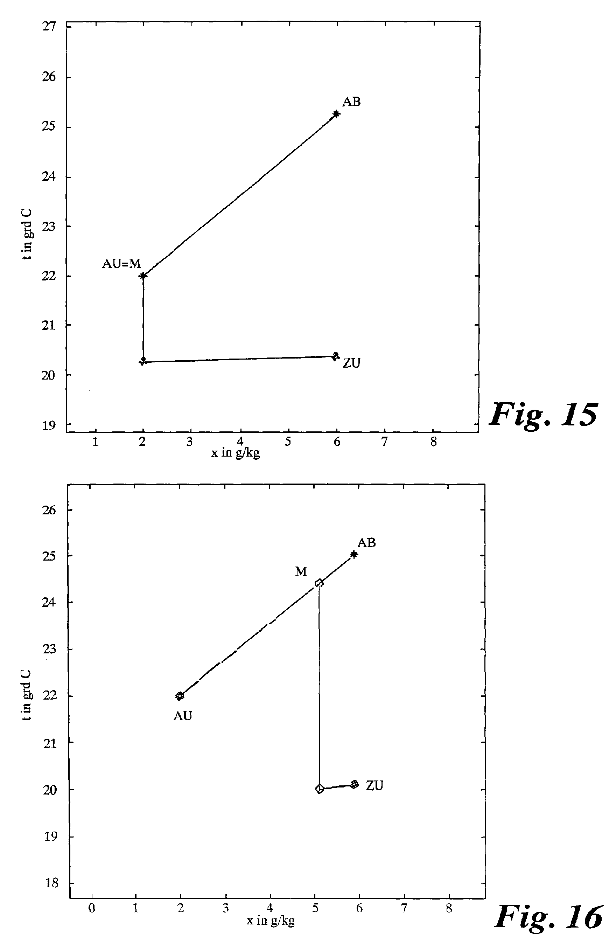

Fig. 15 zeigt für den ermittelten optimalen Abluftzustand AB die Bedarfsvektoren nach dem erfindungsgemäßen Verfahren. Ermittelt wurde der optimale Wert:

$$t_{AB} = 25,0 \text{ °C}; x_{AB} = 6 \text{ g/kg}.$$

Nun wird mit dem zweiten Verfahrensschritt, ausgehend von den ermittelten Werten des optimalen Raumluftzustandes, das optimale Steuersignal für die Mischkammer mit $u_{MK}$ = 0,2 ermittelt.

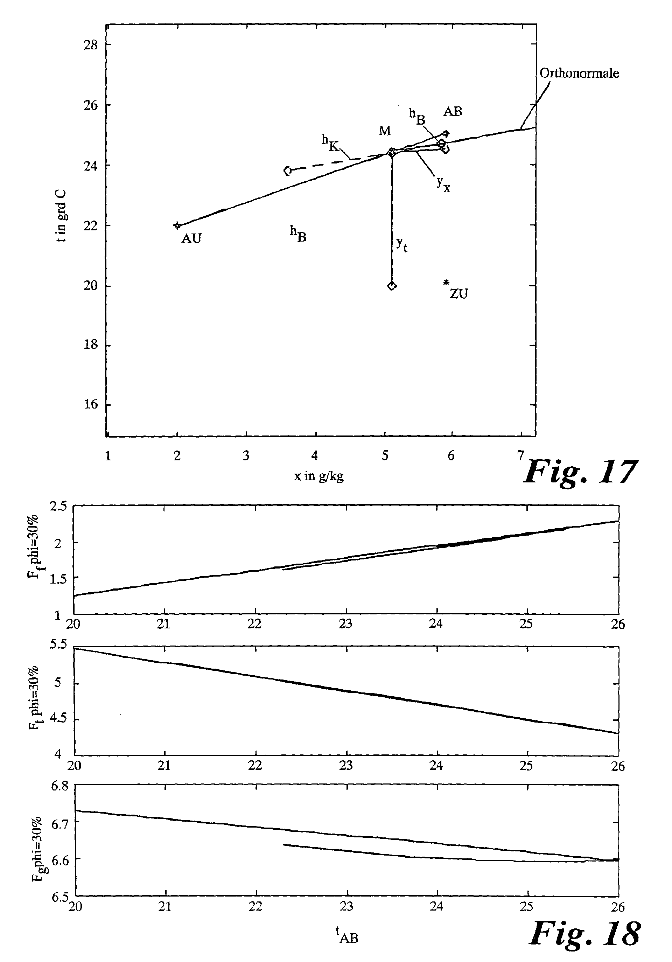

Fig. 16 zeigt die Realisierungsvariante mit der Berechnung der Enthalpien der Bedarfsvektoren und Fig. 17 die Variante mit der Projektion auf die Orthogonalen zur Isenthalpie. Schließlich ist der Verlauf aller Zustandsänderungen aufgrund der ermittelten Steuersignale in Fig. 13 gezeigt.

Mit dem erfindungsgemäßen Verfahren wird ein Zielfunktionswert (normiert auf den Zuluftstrom) von F = 6,59 berechnet. Der Vergleich mit Fig. 14 zeigt, dass dort aufgrund des Startsignals für $U_{MK}$ =1 ein anderer Zielfunktionswert resultierte, aber das Optimum richtig gefunden wurde. Deshalb ist keine Iteration zwischen den beiden Teilschritten notwendig. In Fig. 18 ist als Beweis die Suche des optimalen Abluftzustandes AB für den Wert $u_{MK}$ = 0,2 dargestellt. Jetzt stimmt der Zielfunktionswert überein. Die Lage des Optimums ist jedoch die gleiche wie bei dem erfindungsgemäß ermittelten Startsignal.

Die Berechnung mit dem exakten Vergleichsoptimierungsprogramm ergibt:

$$t_{AB} = 25,2\ ^\circ C;\ x_{AB} = 6\ g/kg;\ u_{MK} = 0,2;\ F = 6,61.$$

Die geringen Unterschiede sind in numerischen Toleranzen im Vergleichsprogramm zu suchen. Es ergibt sich jedoch eine sehr gute Übereinstimmung.

Beispielrechnung 2

Die zugrunde gelegte Aggregatreihung ist die gleiche wie oben. Folgende Ausgangsdaten wurden der Beispielrechnung zugrunde gelegt: Außenluftzustand: $t_{AU}$ = 5 °C; $x_{AU}$ = 3 g/kg; alle spezifischen Kosten gleich; keine Feuchtelast; Wärmelast = 5 kJ/kg (Kühlfall).

Ermittelt wurde mit dem erfindungsgemäßen Verfahren:

$$t_{AB} = 20\ ^\circ C;\ x_{AB} = 4,3\ g/kg;\ u_{MK} = 0,33;\ F = 1,20.$$

Die Ergebnisse sind analog zur Beispielrechnung 1 und werden nicht noch einmal dargestellt. In dieser Beispielrechnung ist die Ermittlung des Steuersignals der Mischkammer mit $u_{MK}$ = 0,33 interessant. Dieser Punkt wird von den meisten der bekannten Verfahren nicht gefunden. Der optimale Wert ergibt sich hier nicht an der unteren Begrenzung (minimaler Außenluftanteil) der Mischkammer.

Der Vergleich mit dem Vergleichsoptimierungsprogramm zeigt ermittelte Werte, die nur in der dritten Stelle nach dem Komma verschieden sind.

Beispielrechnung 3

Die zugrunde gelegte Aggregatreihung ist die gleiche wie oben. Folgende Ausgangsdaten wurden der Beispielrechnung zugrunde gelegt: Außenluftzustand AU: $t_{AU}$ = 14,5 °C; $x_{AU}$ = 8,22 g/kg; alle spezifischen Kosten gleich; Feuchtelast = 0,5 g/kg (Entfeuchten); Wärmelast = 0 kJ/kg (Kühlfall).

Ermittelt wurde mit dem Verfahren: $t_{AB}$ = 22,0 °C; $x_{AB}$ = 10,7 g/kg; $u_{MK}$ = 0,2; F = 2,80.

Interessant an dieser Beispielrechnung ist, dass der optimale Raumluftzustand wirklich in den beiden Kurvenabschnitten der unteren Begrenzung des Behaglichkeitsgebietes gesucht werden muss. Ursache hierfür ist die Feuchtelast. Die Berücksichtigung unterschiedlicher Wärme- und Feuchtelasten, sowie unterschiedlicher Kosten ist mit keinem der bisher bekannten Verfahren möglich.

Wenn in der Aggregatreihung anstatt des Dampfbefeuchters ein Luftwäscher gewählt wird, ändern sich nur die Sequenzen des Feuchtereglers. Hier wird jetzt der Vorerhitzer über eine zusätzliche Sequenz angesteuert. Ansonsten ist das Verfahren analog anzuwenden.

**Patentansprüche**

1. Verfahren zur Steuerung von Lufttemperatur (**t**) und Luftfeuchte (**x**) in Räumen mittels einer aus Luftbehandlungsaggregaten (**MK, ERG**), insbesondere Energierückgewinner (**ERG**) bestehenden Klimaanlage unter Berücksichtigung eines in einem h-x-, bzw. t-x-Diagramm definierten Behaglichkeitsgebietes (**BG**) bei welchem Steuersignale (**$u_{ij}$**) für die Luftbehandlungsaggregate (**MK, ERG**) ausgegeben werden, wobei zur Durchführung des Verfahrens eine Zielfunktion (**G**) zugrunde gelegt wird, deren Parameter durch technisch-physikalische Faktoren, wie Auslegungsgrößen der Luftbehandlungsaggregate (**MK, ERG**), Außenluftzustand (**$t_{AU}$, $X_{AU}$**), Steuersignale (**$u_{ij}$**), Sollwerte der Raumlast (**$t_{Rsoll}$, $x_{Rsoll}$**) und durch spezifische Bewertungsfaktoren (**k**), wie wirtschaftliche, finanzielle und/oder ökologische Betriebsgrößen der Klimaanlage bestimmt sind,

und eine Optimierung der Zielfunktion (*G*) vorgenommen wird, wobei zur Optimierung zwei Teilschritte abgearbeitet werden,

- ein erster Teilschritt, in dem mit dem Behaglichkeitsgebiet (**BG**) im wesentlichen zusammenfallende optimale Raumluftsollwerte ($R_{soll}{}^{opt}$) ausgehend von einem tabellarisch (**Tab. 1**) bestimmten, vom Außenluftzustand ($t_{AU}$, $x_{AU}$) abhängiges Steuer-Startsignal ($u_{MKStart}$) für die Luftbehandlungsaggregate (**MK, ERG**) ermittelt werden und
- ein zweiter Teilschritt, in dem optimale Steuersignale ($u_{ij}{}^{opt}$) für die Luftbehandlungsaggregate (**MK, ERG**) ermittelt und ausgegeben werden.

2. Verfahren nach Anspruch 1, **dadurch gekennzeichnet, dass** das t-x-Diagramm außerhalb des Behaglichkeitsgebiets (**BG**) in drei Steuerregimegebiete mit Kennungen "zu feucht", "zu kalt" und "Restgebiet" aufgeteilt wird, und für jedes Steuerregimegebiet abhängig von den Startbedingungen für Raumlast ($t_{Rsoll}$, $x_{Rsoll}$) und Außenluftzustand ($t_{AU}$, $x_{AU}$) ein Steuer-Startsignal ($u_{MKstart}$) für die Luftbehandlungsaggregate (**MK, ERG**) zugeordnet und tabellarisch (**Tab. 1**) hinterlegt ist und für den ersten Teilschritt verwendet wird.

3. Verfahren nach Anspruch 1 oder 2, **dadurch gekennzeichnet, dass** die Ermittlung des optimalen Raumluftsollwerts ($R_{soll}{}^{opt}$) mittels sequentiellem eindimensionalen Optimierungsverfahren auf zumindest einer der Grenzlinien des Behaglichkeitsgebietes (**BG**) vorgenommen wird.

4. Verfahren nach Anspruch 3, **dadurch gekennzeichnet, dass** die Ermittlung des optimalen Raumluftsollwerts ($R_{soll}{}^{opt}$) auf die Eckpunkte der Grenzlinien des Behaglichkeitsgebietes (**BG**) erstreckt wird.

5. Verfahren nach Anspruch 4, **dadurch gekennzeichnet, dass** eine Vorgabe über die Ausdehnung des Optimierungsverfahren auf die Eckpunkte des Behaglichkeitsgebiets (**BG**) abhängig von den Startbedingungen für Raumlast ($t_{Rsoll}$, $x_{Rsoll}$) und Außenluftzustand ($t_{AU}$, $x_{AU}$) tabellarisch (**Tab. 1**) hinterlegt ist und im ersten Teilschritt verwendet wird.

6. Verfahren nach einem der vorherigen Ansprüche, **dadurch gekennzeichnet, dass** die Genauigkeit des Optimierungsverfahrens vorgegeben ist und das Optimierungsverfahren bei Erreichen der Genauigkeitsschranke abbricht.

7. Verfahren nach einem der vorherigen Ansprüche, **dadurch gekennzeichnet, dass** im zyklischen Durchlauf des eindimensionalen Optimierungsverfahrens die Ermittlung des optimalen Raumluftsollwertes ($R_{soll}{}^{opt}$) durch die Berechnung eines Zielfunktionswertes in einem t-x-Diagramm erfolgt, indem

- ausgehend von dem durch die Startbedingung von Raumlast ($t_{Rsoll}$, $x_{Rsoll}$) und Außenluftzustand ($t_{AU}$, $x_{AU}$) tabellarisch (**Tab. 1**) bestimmten Steuer-Startsignal ($u_{MKStart}$) für den Mischpunkt (**M**) Bedarfswerte für die Temperatur- und/oder Feuchtebehandlung als vektorielle Differenz zwischen dem Mischpunkt (**M**) und dem durch die Raumlast ($t_{Rsoll}$, $x_{Rsoll}$) und den Abluftzustand ($t_{AB}$, $x_{AB}$) bestimmten Zuluftsollwert gebildet werden,
- die Bedarfswerte mit den Richtungsvektoren für die Luftbehandlungsoperationen multipliziert und an den Mischpunkt (**M**) im t-x-Diagramm angelegt werden,
- und die spezifischen Enthalpien für die Endpunkte dieser Bedarfsvektoren ($y_x$, $y_t$) berechnet, mit den spezifischen Bewertungsfaktoren (**k**), die die Anpassung an die jeweilige Zielfunktion realisieren, multipliziert werden und aus der Differenz dieser Werte ein einen Zwischenwert für den angestrebten Raumluftsollwert bestimmenden Zielfunktionswert berechnet wird und der zyklische Durchlauf bis zum Erreichen des optimalen Raumluftsollwertes ($R_{soll}{}^{opt}$) fortgesetzt wird.

8. Verfahren nach einem der Ansprüche 1 bis 6, **dadurch gekennzeichnet, dass** im zyklischen Durchlauf des eindimensionalen Optimierungsverfahrens die Ermittlung des optimalen Raumluftsollwertes ($R_{soll}{}^{opt}$) durch die Berechnung eines Zielfunktionswertes in einem t-x-Diagramm erfolgt, indem

- ausgehend von dem durch das Steuer-Startsignal ($u_{MKStart}$) tabellarisch (**Tab. 1**) bestimmten Steuer-Startsignal ($u_{MKStart}$) für den Mischpunkt (**M**) Bedarfswerte für die Temperatur- und/oder Feuchtebehandlung als vektorielle Differenz zwischen dem Mischpunkt (**M**) und dem durch die Raumlast ($t_{Rsoll}$, $x_{Rsoll}$) und den Abluftzustand ($t_{AB}$, $x_{AB}$) bestimmten Zuluftsollwert gebildet werden,
- die Bedarfswerte mit den Richtungsvektoren für die Luftbehandlungsoperationen sowie spezifischen Bewertungsfaktoren, die die Anpassung an die jeweilige Zielfunktion realisieren, multipliziert und an den Mischpunkt (**M**) im t-x-Diagramm angelegt werden,

-   die so ermittelten Bedarfsvektoren ($y_x$, $y_t$) auf eine Projektionsgerade (**P**) projiziert werden, die orthogonal zu der Isenthalpie (**I**) durch den Mischpunkt (**M**) verläuft,
-   und durch skalare Addition der Beträge dieser Projektionswerte ($h_K$, $h_B$) ein einen Zwischenwert für den angestrebten Raumluftsollwert bestimmenden Zielfunktionswert gebildet wird und der zyklische Durchlauf bis zum Erreichen des optimalen Raumluftsollwertes ($R_{soll}^{opt}$) fortgesetzt wird.

9.  Verfahren nach einem der vorhergehenden Ansprüche, **dadurch gekennzeichnet, dass** die Ermittlung der optimalen Steuersignale ($u_{ij}^{opt}$) für die Luftbehandlungsaggregate (**MK, ERG**) mittels sequentiellem eindimensionalen Optimierungsverfahren auf der Strecke der Zustände der Luftbehandlungsaggregate (**MK, ERG**) zwischen dem Außenluftzustand ($t_{AU}$, $x_{AU}$) und dem optimalen Abluftzustand ($t_{AB}$, $x_{AB}$) innerhalb des t-x-Diagramms erfolgt.

10. Verfahren nach Anspruch 9, **dadurch gekennzeichnet, dass** im zyklischen Durchlauf des eindimensionalen Optimierungsverfahrens die Ermittlung der optimalen Steuersignale ($u_{ij}^{opt}$) für eine Klimaanlage mit Energierückgewinner (**MK, ERG**) durch die Berechnung eines Zielfunktionswertes in einem t-x-Diagramm erfolgt, indem

    -   ausgehend von dem durch den ermittelten Raumluftsollwert definierten Abluftzustand ($t_{AB}$, $x_{AB}$) Bedarfswerte für die Temperatur- und/oder Feuchtebehandlung als vektorielle Differenz zwischen dem Mischpunkt (**M**) und dem durch die Raumlast ($t_{Rsoll}$, $x_{Rsoll}$) und den Abluftzustand ($t_{AB}$, $x_{AB}$) bestimmten Zuluftsollwert (**ZU**) gebildet werden,
    -   die Bedarfswerte mit den Richtungsvektoren für die Luftbehandlungsoperationen multipliziert und an den Mischpunkt (**M**) im t-x-Diagramm angelegt werden,
    -   und die spezifischen Enthalpien für die Endpunkte dieser Bedarfsvektoren ($y_x$, $y_t$) berechnet, mit den spezifischen Bewertungsfaktoren (**k**), die die Anpassung an die jeweilige Zielfunktion (**G**) realisieren, multipliziert werden und aus der Differenz dieser Werte ein einen Zwischenwert für die angestrebten Steuersignale ($u_{ij}^{opt}$) bestimmenden Zielfunktionswert berechnet wird und der zyklische Durchlauf bis zum Erreichen der optimalen Steuersignale ($u_{ij}^{opt}$) fortgesetzt wird.

11. Verfahren nach Anspruch 9, **dadurch gekennzeichnet, dass** im zyklischen Durchlauf des eindimensionalen Optimierungsverfahrens die Ermittlung der optimalen Steuersignale ($u_{ij}^{opt}$) für eine Klimaanlage mit Energierückgewinner (**MK, ERG**) durch die Berechnung eines Zielfunktionswertes in einem t-x-Diagramm erfolgt, indem

    -   ausgehend von dem durch das Steuer-Startsignal ($u_{MKStart}$) tabellarisch (**Tab. 1**) bestimmten Steuer-Startsignal ($u_{MKStart}$) für den Mischpunkt (**M**) Bedarfswerte für die Temperatur- und/oder Feuchtebehandlung als vektorielle Differenz zwischen dem Mischpunkt (**M**) und dem durch die Raumlast ($t_{Rsoll}$, $x_{Rsoll}$) und den Abluftzustand ($t_{AB}$, $x_{AB}$) bestimmten Zuluftsollwert gebildet werden,
    -   die Bedarfswerte mit den Richtungsvektoren für die Luftbehandlungsoperationen sowie spezifischen Bewertungsfaktoren (**k**), die die Anpassung an die jeweilige Zielfunktion realisieren, multipliziert und an den Mischpunkt (**M**) im t-x-Diagramm angelegt werden,
    -   die so ermittelten Bedarfsvektoren ($y_x$, $y_t$) auf eine Projektionsgerade (P) projiziert werden, die orthogonal zu der Isenthalpie (**I**) durch den Mischpunkt (**M**) verläuft,
    -   und durch skalare Addition der Beträge dieser Projektionswerte ($h_K$, $h_B$) ein einen Zwischenwert für die angestrebten Steuersignale ($u_{ij}^{opt}$) bestimmenden Zielfunktionswert berechnet wird und der zyklische Durchlauf bis zum Erreichen der optimalen Steuersignale ($u_{ij}^{opt}$) fortgesetzt wird.

12. Verfahren nach einem der vorherigen Ansprüche, **dadurch gekennzeichnet, dass** ausgehend von den Startbedingungen von Raumlast ($t_{Rsoll}$, $x_{Rsoll}$) und Außenluftzustand ($t_{AU}$, $x_{AU}$) ein Nullenergieband (**NE**) berechnet wird, aus dem der Außenluftzustand ($t_{AU}$, $x_{AU}$) nur mit Mischen, beziehungsweise mit Energierückgewinnen in den Zuluftzustand (**ZU**) überführbar ist und für den Fall, dass der Außenluftzustand ($t_{AU}$, $x_{AU}$) in diesem Nullenergieband (**NE**) liegt, die Mischkammer (**MK**), bzw. der Energierückgewinner (**ERG**) direkt angesteuert wird und keine Steuersignale ($u_{ij}$) an Temperatur- und/oder Feuchteaggregate ermittelt und ausgegeben werden.

13. Vorrichtung zur Durchführung des Verfahrens nach einem der vorhergehenden Ansprüche, **dadurch gekennzeichnet, dass** das Steuerverfahren in mindestens einem programmierbaren Elektronik-Baustein (**1, 2, 3**) implementiert ist und von ihm abgearbeitet wird.

14. Vorrichtung nach dem vorhergehenden Anspruch, **dadurch gekennzeichnet, dass** der Elektronik-Baustein (**1, 2, 3**) in einer speicherprogrammierbaren Steuerung (**SPS**) realisiert ist.

*Fig. 1*

*Fig. 2*

*Fig. 3*

*Fig. 4*

**Fig. 5**

**Fig. 6**

*Fig. 7*

*Fig. 8*

**Fig. 9**

$t_{AU}$    $phi_{AU}$    [1] h,x    $h_{AU}$    $x_{AU}$

$t_{WL}$    $x_{FL}$    [1] h,x    $h_{WL}$    $x_{FL}$

[2] MODUL 2

$h_{R\ Soll}$    $x_{R\ Soll}$    $u_{Bed\ K}$    $u_{Bed\ B}$

EP 1 209 547 A2

*Fig. 10*

*Fig. 11*

EP 1 209 547 A2

$t_{AU}$

$phi_{AU}$

$h,x$

$h_{AU}$

$x_{AU}$

$t_{WL}$

$x_{FL}$

$h,x$

$h_{WL}$

$x_{FL}$

$h_{R\,Soll}$

$x_{R\,Soll}$

$h,x$

$t_{R\,Soll}$

$x_{R\,Soll}$

$t_R$

Fü-R TC

Fü-R XC

$h,x$

$x_R$

$phi_R$

$u_{Vent.}$

SEQ

$t_{ZU\,Soll}$

$x_{ZU\,Soll}$

FO-R XC

FO-R TC

$u_{NE}$

$u_K$

SEQ

$u_K$

$u_B$

SEQ

SEQ

$u_{Bed\,K}$

$u_{Bed\,B}$

$h_{ZU\,Soll}$

$x_{ZU\,Soll}$

$h,x$

$x_{R\,Soll}$

$h_{R\,Soll}$

$x_{AU}$

$h_{AU}$

$h_{ZU\,Soll}$

$x_{ZU\,Soll}$

$u_{MK/WRG}^{opt}$

ERG

*Fig. 12*

*Fig. 13*

*Fig. 14*

*Fig. 15*

*Fig. 16*

*Fig. 17*

*Fig. 18*